# EUROPEAN PATENT APPLICATION

(11) **EP 4 786 549 A1**
(43) Date of publication of application: **05.08.2026**
(21) Application number: 24871974.2
(22) Date of filing: 17.09.2024
(51) Int. Cl.: C09C 1/40, C08K 3/28, C08K 9/02, C08K 9/04, C08K 9/06, C08L 63/00, C09C 3/10, C09C 3/12

(54) **ALUMINUM NITRIDE FILLER, METHOD FOR PRODUCING ALUMINUM NITRIDE FILLER, RESIN COMPOSITION, AND METHOD FOR PRODUCING RESIN COMPOSITION**

(30) Priority: 26.09.2023 JP 2023163246
(71) Applicant: Resonac Corporation, Tokyo 105-7325 (JP)
(72) Inventor: MINORIKAWA Naoki, Tokyo 105-7325 (JP); IEMURA Takeshi, Tokyo 105-7325 (JP); FUNAHASHI Hajime, Tokyo 105-7325 (JP)
(74) Representative: Strehl & Partner mbB
(86) International application number: PCT/JP2024/033143
(87) International publication number: WO 2025/070180

(57) **Abstract**

Provided are an aluminum nitride filler, and a method for producing the same, including aluminum nitride particles and a film (a) including a compound (A) having a polyethyleneimine backbone and a polyalkylene oxide chain, and having a weight average molecular weight of 2000 or more and 10000 or less.

## Description

### Technical Field

The present invention relates to an aluminum nitride filler, a method for producing the aluminum nitride filler, a resin composition, and a method for producing the resin composition.

### Background Art

Nitride fillers have high thermal conductivity and excellent electrical insulating properties. This means that nitride fillers are a promising material as a filler in a resin composition used for products such as heat dissipating sheets and sealing agents for electronic parts. Among nitride fillers, aluminum nitride may undergo hydrolysis upon reacting with moisture, thereby changing into aluminum hydroxide, which has low thermal conductivity. The hydrolysis of aluminum nitride may also generate ammonia, which is corrosive.

Technologies for improving the moisture resistance of aluminum nitride that have been proposed include a method of forming a layer composed of Si-Al-O-N on the surface of an aluminum nitride powder (for example, see Patent Literature 1), a method of forming a coating layer on the surface of an aluminum nitride powder with a silicate treatment agent and a coupling agent (for example, see Patent Literature 2), a method in which a treatment is performed with a silicate treatment agent to leave an organic group on the surface of an aluminum nitride powder (for example, see Patent Literature 3), a method in which the surface of aluminum nitride particles is surface-modified using a specific acidic phosphate ester (for example, see Patent Literature 4), and an improvement method that provides even better moisture resistance and thermal conductivity (for example, see Patent Literature 5).

In the moisture-proof aluminum nitride powder of Patent Literature 1, a silicate ester layer is applied on the surface of the aluminum nitride powder, and then calcination is performed at a high temperature of 350 to 1000°C to form a layer composed of Si-Al-O-N on the surface. In the aluminum nitride powder of Patent Literature 2, a coating layer is formed on the surface by performing a surface treatment with a silicate treatment agent and a coupling agent, and then carrying out a high-temperature heat treatment. In the aluminum nitride powder of Patent Literature 3, a surface treatment is performed with a silicate treatment agent, and a heat treatment is then carried out at a temperature of not more than 90°C to leave an organic group and thus improve compatibility with the resin. In the surface-modified particles of Patent Literature 4, aluminum nitride particles are surface-modified with a specific acidic phosphate ester to improve moisture resistance. In the surface-modified particles of Patent Literature 5, aluminum nitride particles having excellent moisture resistance are formed by coating with an extremely thin, homogeneous, and dense silica film.

Further, boron nitride is also used in various heat dissipating materials due to having a high thermal conductivity, does not suffer from the moisture resistance problems of aluminum nitride, and also takes advantage of having a low dielectric constant, and thus is being developed for various applications. However, even with boron nitride, the primary particles are plate-shaped, and so not only are there few active sites where the silane coupling agent can act on, those active sites are localized at the ends. As a result, boron nitride, particularly with high filling, suffers from a problem in terms of compatibility with the resin and the problem that the slurry viscosity tends to increase.

### Citation List

### Patent Literature

PTL1: JP 3446053 B
PTL2: JP 4088768 B
PTL3: JP 4804023 B
PTL4: JP 2015-71730 A
PTL5: WO 2020/040309 A1

### Summary of Invention

### Technical Problem

Technologies that improve the moisture resistance of aluminum nitride by using a conventional technique and take advantage of the high thermal conductivity of aluminum nitride are widely practiced. However, there has been a problem in that when aluminum nitride is mixed with an epoxy resin, the viscosity of the resulting resin composition tends to increase. In particular, a problem has been that aluminum nitride having multiple coating layers in order to improve moisture resistance without reducing the inherent high thermal conductivity of aluminum nitride suffers from a larger increase in viscosity when mixed with an epoxy resin.

Further, resin compositions that contain an aluminum nitride filler and an epoxy resin and are used for products such as a heat dissipation sheet and a sealant for electronic components need to have good adhesive strength in order to be used in a variety of applications.

The present invention has been created in view of such circumstances, and it is an object of the present invention to provide an aluminum nitride filler, a method for producing the aluminum nitride filler, a resin composition including the aluminum nitride filler, and a method for producing the resin composition, which enable an increase in viscosity when mixed with an epoxy resin to be suppressed, and a decrease in adhesive strength after curing of an epoxy resin-containing resin composition to be suppressed.

### Solution to Problem

As a result of intensive studies, the present inventors discovered that the problems described above can be solved by an aluminum nitride filler having a film that contains aluminum nitride particles and a specific compound, to thereby complete the present invention. That is, the present invention has the following configuration.
[1] An aluminum nitride filler including:
   aluminum nitride particles; and
   a film (a) including a compound (A) having a polyethyleneimine backbone and a polyalkylene oxide chain, and having a weight average molecular weight of 2000 or more and 10000 or less.
[2] The aluminum nitride filler according to the above [1], including a silicon-containing oxide film (b).
[3] The aluminum nitride filler according to the above [1] or [2], including an organosilicone compound film (c) having a silanol group.
[4] The aluminum nitride filler according to the above [3], wherein the film (a) and the organosilicone compound film (c) are adjacent.
[5] The aluminum nitride filler according to any one of the above [1] to [4], including 5.0×10⁻⁴ g or more and less than 5.0×10⁻² g of the compound (A) per 1 m² of surface area calculated from a specific surface area (m²/g) of the aluminum nitride particles determined by a BET method.
[6] The aluminum nitride filler according to the above [2], including 5.0x10⁻⁴ g or more and less than 5.0×10⁻² g of the compound (A) per 1 m² of surface area calculated from a specific surface area (m²/g) of a particle containing the silicon-containing oxide film (b) and the aluminum nitride particle determined by a BET method.
[7] The aluminum nitride filler according to the above [3] or [4], including 5.0×10⁻⁴ g or more and less than 5.0×10⁻² g of the compound (A) per 1 m² of surface area calculated from a specific surface area (m²/g) of a particle containing the organosilicone compound film (c) having a silanol group and the aluminum nitride particle determined by a BET method.
[8] The aluminum nitride filler according to the above [3] or [4], including 5.0×10⁻⁴ g or more and less than 5.0×10⁻² g of the compound (A) per 1 m² of surface area calculated from a specific surface area (m²/g) of a particle containing the silicon-containing oxide film (b), the organosilicone compound film (c) having a silanol group, and the aluminum nitride particle determined by a BET method.
[9] A method for producing an aluminum nitride filler including aluminum nitride particles and a film (a) including a compound (A) having a polyethyleneimine backbone and a polyalkylene oxide chain, and having a weight average molecular weight of 2000 or more and 10000 or less,
   the method including a fourth step of forming the film (a).
[10] The method for producing an aluminum nitride filler according to the above [9], including:
   a first step of performing coating with an organosilicone compound having an active hydrogen; and
   a second step of forming a silicon-containing oxide film (b) by heating.
[11] The method for producing an aluminum nitride filler according to the above [9] or [10], including a third step of forming an organosilicone compound film (c) having a silanol group by performing coating with an organosilicone compound having an active hydrogen by vapor deposition and treating the organosilicone compound used in the coating with a basic substance.
[12] A resin composition including the aluminum nitride filler according to any one of the above [1] to [8] and an epoxy resin.
[13] A method for producing the resin composition according to the above [12], including a step I of admixing the aluminum nitride filler to the epoxy resin.
[14] A method for producing the resin composition according to the above [12] or [13], including:
   a step II-1 of obtaining a composition i including the compound (A) and the epoxy resin; and
   a step II-2 of admixing, to the composition i, at least one particle selected from an aluminum nitride particle, a particle containing a silicon-containing oxide film (b) and an aluminum nitride particle, a particle containing an organosilicone compound film (c) and an aluminum nitride particle, and a particle containing a silicon-containing oxide film (b), an organosilicone compound film (c), and an aluminum nitride particle.

### Advantageous Effects of Invention

According to the present invention, it is possible to provide an aluminum nitride filler, a method for producing the aluminum nitride filler, a resin composition including the aluminum nitride filler, and a method for producing the resin composition, which enable an increase in viscosity when mixed with an epoxy resin to be suppressed, and a decrease in adhesive strength after curing of an epoxy resin-containing resin composition to be suppressed.

### Description of Embodiments

The present invention will now be described in detail.

The present invention also includes aspects in which the matters described in this specification are freely selected or freely combined.

In this specification, preferable provisions can be freely selected, and combinations of preferable provisions can be said to be more preferable.

In this specification, the expression "from XX to YY" means "XX or more and YY or less".

In this specification, the lower limit value and upper limit value described in a stepwise manner in relation to preferable numerical ranges (for example, content ranges and the like) can each be independently combined. For example, the description "preferably from 10 to 90, and more preferably from 30 to 60" can combine "preferable lower limit value (10)" and "more preferable upper limit value (60)" and be read as "from 10 to 60".

In this specification, the "cumulative volume 50% particle size (D50)" indicates the particle size at which the cumulative volume value is 50% for a certain particle size distribution. The D50 is determined from a particle size distribution obtained by a laser diffraction scattering method. Specifically, the D50 can be measured by using a laser diffraction/scattering particle size distribution measuring instrument (manufactured by Microtrac Bell Co., Ltd., trade name: Microtrac MT3300EX2) or the like.

### <Aluminum nitride filler>

The aluminum nitride filler according to the present invention includes aluminum nitride particles and a film (a) containing a compound (A) having a polyethyleneimine backbone and a polyalkylene oxide chain and having a weight average molecular weight of 2000 or more and 10000 or less.

By containing the film (a) containing the compound (A), the aluminum nitride filler can suppress the increase in viscosity when mixed with an epoxy resin, and can suppress the decrease in adhesive strength after curing of the epoxy resin-containing resin composition.

### [Aluminum nitride particles]

When aluminum nitride particles are used as a raw material in the aluminum nitride filler according to the present invention, a commercially available product or other such known aluminum nitride particles can be used.

The method for producing the aluminum nitride particles is not particularly limited, and examples include a direct nitriding method in which a metal aluminum powder is directly reacted with nitrogen or ammonia, a reduction nitriding method in which a nitriding reaction is performed at the same time as heating alumina in a nitrogen or ammonia atmosphere while reducing with carbon.

Further, as the aluminum nitride particles, particles obtained by sintering an aggregate of aluminum nitride particles into granules can be used, and, for example, sintered granules produced using high-purity aluminum nitride particles as a raw material can be suitably used.

Here, high-purity aluminum nitride particles are particles having a low oxygen content and few metal impurities. Specifically, for example, high-purity aluminum nitride particles having an oxygen content of 1% by mass or less and a total content of metal impurities (that is, metal atoms other than aluminum) of 1000 ppm by mass or less are suitable for obtaining a higher thermal conductivity for the aluminum nitride particles contained in the aluminum nitride filler.

The aluminum nitride particles can be used alone or in combination.

The oxygen content can be measured with an inorganic analyzer or the like that is equipped with an infrared detector for oxygen detection. Specifically, the oxygen content can be measured using an oxygen/nitrogen/hydrogen analyzer (ONH836: manufactured by LECO Japan Corporation) or the like.

Further, the total content of metal atoms other than aluminum can be measured using an ICP (Inductively Coupled Plasma) mass spectrometer or the like. Specifically, the total content of metal atoms other than aluminum can be measured using an ICP mass spectrometer (ICPMS-2030: manufactured by Shimadzu Corporation).

The shape of the aluminum nitride particles used in the present invention is not particularly limited, and examples thereof include amorphous (crushed), spherical, elliptical, plate-like shape (flakes), and the like. In addition, when the aluminum nitride filler is dispersed and contained in a resin composition, aluminum nitride particles of the same type (single aluminum nitride particles) having the same shape and structure may be used alone as the aluminum nitride particles, but it is also possible to use a mixture of aluminum nitride particles in which two or more different types of aluminum nitride particles having different shapes and structures are mixed in various proportions.

When an aluminum nitride filler is dispersed and contained in a resin composition, the larger the volume ratio (filling amount) of the aluminum nitride particles constituting the aluminum nitride filler is with respect to the resin composition, the higher the thermal conductance of the resin composition. Therefore, the shape of the aluminum nitride particles is preferably close to a spherical shape so that the viscosity of the resin composition is less likely to increase due to the addition of the aluminum nitride filler.

The cumulative volume 50% particle size (D50) of the aluminum nitride particles used in the present invention is not particularly limited, but is preferably 0.1 µm or more, more preferably 0.3 µm or more and 200.0 µm or less, further preferably 0.4 µm or more and 100.0 µm or less, and particularly preferably 0.5 µm or more and 85.0 µm or less.

If the D50 of the aluminum nitride particles is within the above range, even when a resin composition containing an aluminum nitride filler is used as a heat dissipating material to be mounted on a power electronic component, a thin heat dissipating material having a minimum thickness can be provided, and perhaps because the film can easily cover the surface of the aluminum nitride particles uniformly, the moisture resistance of the aluminum nitride filler is further improved.

### [Film (a)]

The film (a) contained in the aluminum nitride filler according to the present invention contains a compound (A) that has a polyethyleneimine backbone and a polyalkylene oxide chain and has a weight average molecular weight of 2000 or more and 10000 or less.

The content of compound (A) in film (a) is not particularly limited, but from the viewpoint of suppressing the increase in viscosity and suppressing the decrease in adhesive strength after curing of the epoxy resin-containing resin composition, the content is preferably 80% by mass or more, more preferably 90% by mass or more, further preferably 98% by mass or more, and may be 100% by mass. That is, film (a) may be formed from the compound (A).

The film (a) may be formed adjacent to the aluminum nitride particle, or may be formed on the aluminum nitride particle via another layer, for example, a silicon-containing oxide film (b) described later, an organosilicone compound film (c) having a silanol group described later, and the like.

From the viewpoint of effectively obtaining the effects of the present invention, it is preferable that the film (a) is formed as the outermost layer of the aluminum nitride filler.

In addition to the compound (A), the film (a) may optionally contain a dispersant such as a surface treatment agent, a tackifier, and the like.

Examples of the dispersant include DISPERBYK106, BYK-W9010, BYK-P104 (all manufactured by BYK Chemie Japan), Florene G700 (Kyoeisha Chemical Co., Ltd.), and the like. Examples of the tackifier include a hydrogenated petroleum resin Alcon M-90 (manufactured by Arakawa Chemical Industries, Ltd.), and terpene resins YS resin TO-85 and YS Polyster T80 (both manufactured by Yasuhara Chemical Co., Ltd.).

### (Compound (A))

The compound (A) contained in the film (a) contained in the aluminum nitride filler according to the present invention has a polyethyleneimine backbone and a polyalkylene oxide chain, and has a weight average molecular weight of 2000 or more and 10000 or less.

The polyethyleneimine backbone has an ethyleneimine (-CH₂CH₂NH-) constituent unit. The polyethyleneimine backbone may be branched if the hydrogen on the nitrogen is substituted with another chain of the constituent unit ethyleneimine. Therefore, examples of the polyethyleneimine backbone include not only a polyethyleneimine backbone having a completely linear structure, but also a polyethyleneimine backbone having a branched chain structure containing a primary, a secondary, or a tertiary amino nitrogen.

It is preferable that the number of nitrogen atoms in one molecule of the polyethyleneimine backbone is 3 or more and 10 or less from the viewpoint of suppressing the increase in viscosity and suppressing the decrease in adhesive strength after curing of the epoxy resin-containing resin composition.

The alkylene oxide contained in the polyalkylene oxide chain is preferably an alkylene oxide having from 2 to 4 carbon atoms, such as ethylene oxide, propylene oxide, oxetane, butylene oxide, tetrahydrofuran, and the like. Among these, propylene oxide is preferable from the viewpoint of suppressing the increase in viscosity and suppressing the decrease in adhesive strength after curing of the epoxy resin-containing resin composition.

From the viewpoint of suppressing the increase in viscosity and suppressing the decrease in adhesive strength after curing of the epoxy resin-containing resin composition, the compound (A) preferably has, as side chains, from 1 to 10 polyalkylene oxide chains having from 8 to 15 repeating units.

If a general surfactant or the like is added when mixing the aluminum nitride particles or a filler containing aluminum nitride particles with an epoxy resin, an increase in the viscosity of the resulting resin composition can be suppressed. However, when a general surfactant or the like is added, the adhesive strength at the interface of the epoxy resin with the aluminum nitride particles or the filler containing the aluminum nitride particles decreases, so the strength of a cured product of the resulting resin composition decreases, and the adhesive strength at the phase interface also decreases.

On the other hand, in the present invention, since the compound (A) has a polyethyleneimine backbone and a polyalkylene oxide chain, it is possible to not only suppress an increase in the viscosity of the resin composition, but also suppress a decrease in adhesive strength at the interface between the aluminum nitride filler and the epoxy resin, and suppress a decrease in adhesive strength at the phase interface.

The weight average molecular weight of the compound (A) is not particularly limited as long as it is 2000 or more and 10000 or less, but from the viewpoint of further suppressing the increase in viscosity when mixed with an epoxy resin and suppressing the decrease in adhesive strength after curing of the epoxy resin-containing resin composition, the weight average molecular weight is preferably from 2500 to 9000, more preferably from 3000 to 7000, and further preferably from 3500 to 6000.

In this specification, the weight average molecular weight is a value measured by matrix-assisted laser desorption ionization time-of-flight mass spectrometry (MALDI-TOF MS), and specifically, can be measured by the method described in the Examples.

When the aluminum nitride filler contains the aluminum nitride particles and the film (a), the content of the compound (A) in the aluminum nitride filler is, from the viewpoint of further suppressing the increase in viscosity when mixed with an epoxy resin and suppressing the decrease in adhesive strength after curing of the epoxy resin-containing resin composition, preferably 5.0×10⁻⁴ g or more and less than 5.0×10⁻² g, more preferably 2.0×10⁻³ g or more and 4.0×10⁻² g or less, and further preferably 4.0×10⁻³ g or more and 3.5×10⁻² g or less, per 1 m² of surface area calculated from the specific surface area (m²/g) of the aluminum nitride particles determined by the BET method.

As used herein, the specific surface area (m²/g) determined by the BET method is a value measured by the nitrogen adsorption BET single-point method using a gas flow method. As the evaluation device, a Macsorb HM model-1220 manufactured by Mountech can be used.

When the aluminum nitride filler contains the aluminum nitride particles, the film (a), and the silicon-containing oxide film (b), the content of the compound (A) in the aluminum nitride filler is, from the viewpoint of further suppressing the increase in viscosity when mixed with an epoxy resin and suppressing the decrease in adhesive strength after curing of the epoxy resin-containing resin composition, preferably 5.0×10⁻⁴ g or more and less than 5.0×10⁻² g, more preferably 2.0×10⁻³ g or more and 4.0×10⁻² g or less, and further preferably 4.0×10⁻³ g or more and 3.5×10⁻² g or less, per 1 m² of surface area calculated from the specific surface area (m²/g) of the particle containing an aluminum nitride particle and the silicon-containing oxide film (b) determined by the BET method.

When the aluminum nitride filler contains the aluminum nitride particles, the film (a), and the organosilicone compound film (c) having a silanol group, the content of the compound (A) in the aluminum nitride filler is, from the viewpoint of further suppressing the increase in viscosity when mixed with an epoxy resin and suppressing the decrease in adhesive strength after curing of the epoxy resin-containing resin composition, preferably 5.0×10⁻⁴ g or more and less than 5.0×10⁻² g, more preferably 2.0×10⁻³ g or more and 4.0×10⁻² g or less, and further preferably 4.0×10⁻³ g or more and 3.5×10⁻² g or less, per 1 m² of surface area calculated from the specific surface area (m²/g) of the particle containing an aluminum nitride particle and the organosilicone compound film (c) having a silanol group determined by the BET method.

When the aluminum nitride filler contains the aluminum nitride particles, the film (a), the silicon-containing oxide film (b), and the organosilicone compound film (c) having a silanol group, the content of the compound (A) in the aluminum nitride filler is, from the viewpoint of further suppressing the increase in viscosity when mixed with an epoxy resin and suppressing the decrease in adhesive strength after curing of the epoxy resin-containing resin composition, preferably 5.0×10⁻⁴ g or more and less than 5.0×10⁻² g, more preferably 2.0×10⁻³ g or more and 4.0×10⁻² g or less, and further preferably 4.0×10⁻³ g or more and 3.5×10⁻² g or less, per 1 m² of surface area calculated from the specific surface area (m²/g) of the particle containing an aluminum nitride particle, the silicon-containing oxide film (b), and the organosilicone compound film (c) having a silanol group determined by the BET method.

### [Silicon-containing oxide film (b)]

The aluminum nitride filler according to the present invention may contain a silicon-containing oxide film (b). When the aluminum nitride filler contains the silicon-containing oxide film (b), moisture resistance is improved.

Examples of the "silicon-containing oxide" of the silicon-containing oxide film (b) include silica and composite oxides of the element silicon and the element aluminum. In this specification, the term oxides includes oxynitrides, oxycarbonitrides, and the like.

From the viewpoint of moisture resistance, the content of the silicon-containing oxide film (b) in the aluminum nitride filler is preferably from 0.8×10⁻⁵ to 2.5×10⁻² [SiO₂ equivalent g/m²], more preferably from 1.0×10⁻⁴ to 2.0×10⁻² [SiO₂ equivalent g/m²], and further preferably from 2.0×10⁻⁴ to 1.5×10⁻² [SiO₂ equivalent g/m²].

The content of the silicon-containing oxide film (b) in the aluminum nitride filler can be determined by dividing the silicon atom content (ΔSi amount) measured by ICP emission spectrometry by the surface area (m²) calculated from the specific surface area (m²/g) of the aluminum nitride filler determined by the BET method.

From the viewpoint of better moisture resistance, the silicon atom content (ΔSi amount) in the silicon-containing oxide film (b) is preferably from 20 to 2000 mass ppm, more preferably from 30 to 1950 mass ppm, and further preferably from 40 to 1900 mass ppm.

The ΔSi amount can be measured by ICP emission spectrometry.

The silicon-containing oxide film (b) can be formed by the <Method for producing aluminum nitride filler> described later. Further, the silicon-containing oxide film (b) is preferably formed using the <Organosilicone compound> described later as a raw material.

From the viewpoint of further improving moisture resistance, the silicon-containing oxide film (b) is preferably formed on the surface of the aluminum nitride particles. That is, when the aluminum nitride filler according to the present invention contains the silicon-containing oxide film (b), it is preferable that the aluminum nitride particle and the silicon-containing oxide film (b) are formed adjacent to each other.

### [Organosilicone compound film (c) having a silanol group]

The aluminum nitride filler according to the present invention may further contain an organosilicone compound film (c) having a silanol group (hereinafter sometimes simply referred to as "organosilicone compound film (c)"). The organosilicone compound film (c) has a high affinity with the compound (A), and so when the aluminum nitride filler contains the organosilicone compound film (c), the interfacial adhesive strength between the resin contained in the resin composition described later and the aluminum nitride filler is improved, and when the resin composition is laminated and molded, the adhesive strength at the layer interface is improved.

The organosilicone compound film (c) contains an organosilicone compound having a structure represented by the following formula (i).

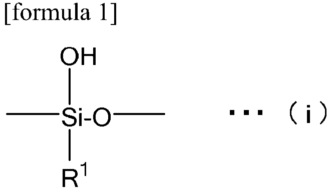

In formula (i), R¹ is an alkyl group having from 1 to 4 carbon atoms.

The organosilicone compound containing the structure represented by the above formula (i) may be linear, cyclic, or branched.

The content of the organosilicone compound containing the structure represented by the above formula (i) in the organosilicone compound film (c) is not particularly limited, but from the viewpoint of suppressing a decrease in the interfacial adhesive strength between the resin contained in the resin composition and the aluminum nitride filler, the content is preferably 80% by mass or more, more preferably 90% by mass or more, further preferably 98% by mass or more, and may be 100% by mass. That is, the organosilicone compound film (c) may be formed from an organosilicone compound containing the structure represented by the above formula (i).

The content of the organosilicone compound containing the structure represented by the above formula (i) in the organosilicone compound film (c) can be calculated by converting the value measured by ICP emission spectrometry.

From the viewpoint of suppressing a decrease in thermal conductivity, the content of the organosilicone compound film (c) in the aluminum nitride filler is preferably from 0.8×10⁻⁵ to 2.5×10⁻² [SiO₂ equivalent g/m²], more preferably from 1.0×10⁻⁴ to 2.0×10⁻² [SiO₂ equivalent g/m²], and further preferably from 2.0×10⁻⁴ to 1.5×10⁻² [SiO₂ equivalent g/m²].

The content of the organosilicone compound film (c) can be determined by the same method as that for the content of the silicon-containing oxide film (b) in the aluminum nitride filler.

The organosilicone compound film (c) is preferably formed adjacent to the film (a) from the perspective of suppressing a decrease in the interfacial adhesive strength between the resin contained in the resin composition and the aluminum nitride filler, and is preferably formed between the aluminum nitride particles and the film (a) from the perspective of effectively obtaining the effects of the present invention. Further, when the aluminum nitride filler contains the silicon-containing oxide film (b), from the viewpoint of effectively obtaining the effects of the present invention, it is preferable that the aluminum nitride particle and the silicon-containing oxide film (b) are adjacent to each other, the surface of the silicon-containing oxide film (b) that is opposite to the surface in contact with the aluminum nitride particle is adjacent to the organosilicone compound film (c), and the film (a) is formed as the outermost layer.

### <Method for producing aluminum nitride filler>

The method for producing an aluminum nitride filler according to the present invention is a method for producing the above-described aluminum nitride filler. That is, the method for producing an aluminum nitride filler according to the present invention is a method for producing an aluminum nitride filler including aluminum nitride particles and a film (a) containing a compound (A) having a polyethyleneimine backbone and a polyalkylene oxide chain and having a weight average molecular weight of 2000 or more and 10000 or less, wherein the method includes a fourth step of forming the film (a).

The method for producing an aluminum nitride filler according to the present invention may have, other than the fourth step, a first step of performing coating with an organosilicone compound having an active hydrogen, may have a second step of forming a silicon-containing oxide film (b) by heating, and may have a third step of forming an organosilicone compound film (c) having a silanol group by performing coating with an organosilicone compound having an active hydrogen by vapor deposition and treating with a basic substance.

The method for producing an aluminum nitride filler according to the present invention may have, other than the fourth step, a first step of performing coating with an organosilicone compound having an active hydrogen and a second step of forming a silicon-containing oxide film (b) by heating.

The method for producing an aluminum nitride filler according to the present invention may have, other than the fourth step, a first step of performing coating with an organosilicone compound having an active hydrogen, a second step of forming a silicon-containing oxide film (b) by heating, and a third step of forming an organosilicone compound film (c) having a silanol group by treating with a basic substance.

The first to fourth steps will now be described below.

### [First step]

This step is a step of performing coating with an organosilicone compound having an active hydrogen, and is a step carried out to form the silicon-containing oxide film (b).

The coating targets to be coated with the organosilicone compound having an active hydrogen are the aluminum nitride particles and a particle containing the silicon-containing oxide film (b) and an aluminum nitride particle.

### <Organosilicone compound having active hydrogen>

In the aluminum nitride filler according to the present invention, the organosilicone compound having an active hydrogen (hereinafter sometimes simply referred to as "organosilicone compound") used as a raw material for the silicon-containing oxide film (b) is, from the viewpoint of moisture resistance, preferably an organosilicone compound containing a structure represented by the following formula (1), and may be linear, cyclic, or branched. The structure represented by the following formula (1) is a hydrogen siloxane unit in which a hydrogen is directly bonded to a silicon atom.

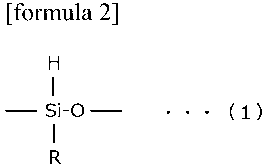

In formula (1), R is an alkyl group having from 1 to 4 carbon atoms.

In the above formula (1), R, which is an alkyl group having 1 or more and 4 or less carbon atoms, is, from the viewpoint of volatilizing the silicone compound, preferably a methyl group, an ethyl group, a propyl group, a t-butyl group, or the like, and particularly preferably a methyl group. In the aluminum nitride filler according to the present invention, the organosilicone compound used as a raw material is, for example, an oligomer or polymer containing the structure represented by formula (1).

The organosilicone compound is preferably, for example, at least one of a compound represented by the following formula (2) and a compound represented by the following formula (3).

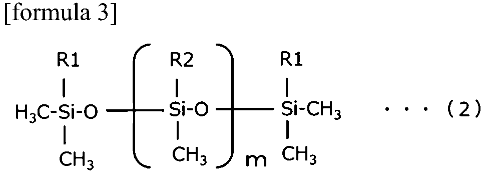

In formula (2), R1 and R2 are each independently a hydrogen atom or a methyl group, at least one of R1 and R2 is a hydrogen atom, and m is an integer from 0 to 10.

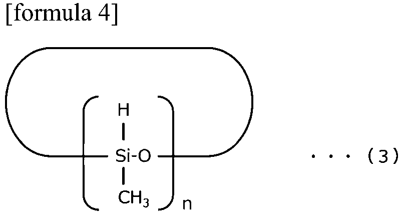

In formula (3), n is an integer of from 3 to 6.

In particular, a cyclic hydrogen siloxane oligomer in which n is 4 in the above formula (3) is excellent in that a silicon-containing oxide film (b) can be uniformly formed on the surface of the coating target. The weight average molecular weight of the organosilicone compound containing the structure represented by formula (1) is preferably 100 or more and 2000 or less, more preferably 150 or more and 1000 or less, and further preferably 180 or more and 500 or less. It is inferred that by using an organosilicone compound having a weight average molecular weight in this range and having the structure represented by formula (1), it is easy to form a thin and uniform silicon-containing oxide film (b) on the surface of the coating target. In addition, in Formula (2), m is preferably 1.

In the first step, as long as the surface of the coating target can be covered with the organosilicone compound, the method is not particularly limited. Examples of the method for the first step include a dry mixing method in which, using a common powder mixing apparatus, dry mixing is performed by adding the organosilicone compound by spraying while the coating target is stirred. Examples of the powder mixing apparatus include a Henschel mixer, a rotary vessel-type V blender, a ribbon blender having mixing blades such as a double cone-type blender, a screw-type blender, a hermetic rotary kiln, and stirring by means of a stirring bar of a hermetic container using magnet coupling. The temperature conditions in this case depend on the boiling point and vapor pressure of the organosilicone compound, but are preferably, although not particularly limited to, a temperature of 10°C or higher and 200°C or lower, more preferably 20°C or higher and 150°C or lower, and further preferably in the range of 40°C or higher and 100°C or lower.

Further, as the method for the first step, a vapor-phase adsorption method may be used in which vapor of the organosilicone compound alone or a mixed gas thereof with an inert gas such as nitrogen gas is caused to be attached or deposited by vapor onto the surface of the coating target left to stand. The temperature conditions in this case depend on the boiling point and vapor pressure of the organosilicone compound, but are preferably a temperature of 10°C or higher and 200°C or lower, more preferably 20°C or higher and 150°C lower, and further preferably in the range of 40°C or higher and 100°C or lower. The treatment time is preferably from 3 to 7 hours, and more preferably from 3.5 to 5 hours. If necessary, the inside of the system may be pressurized or depressurized [sometimes referred to as chemical vapor deposition (CVD) method]. As an apparatus that can be used in this case, an apparatus which is a hermetic system and in which the gas in the system can be easily replaced is preferable, and, for example, a glass container, a desiccator, a CVD apparatus or the like can be used. When coating the coating target with the organosilicone compound without stirring, it is necessary to take a longer treatment time. However, even in places where the powder particles are hidden due to being in contact with each other, or for powder particles far from the upper air layer, it is possible to perform the treatment more efficiently by intermittently placing the treatment container on a vibrator to cause the powder particles to move.

The amount of the organosilicone compound used in the first step is not particularly limited. When an organosilicone compound containing the structure represented by formula (1) is used as the organosilicone compound, the coating amount of the organosilicone compound containing the structure represented by formula (1) is preferably 0.08 mg or more and 20.0 mg or less, more preferably in the range of 0.09 mg or more and 15.0 mg or less, and further preferably in the range of 1.0 mg or more and 10.0 mg or less per 1 m² of the surface area calculated from the specific surface area (m²/g) of the coating target determined by the BET method. With the above coating amount, a decrease in thermal conductance can be suppressed and sufficient moisture resistance can also be conferred.

The coating amount of the organosilicone compound containing the structure represented by formula (1) per 1 m² of the surface area calculated from the specific surface area (m²/g) of the coating target determined by the BET method can be determined by dividing the difference between the masses of the coating target before and after coating with the organosilicone compound by the surface area (m²) calculated from the specific surface area (m²/g) of the coating target determined by the BET method.

The organosilicone compound may be introduced at any stage before the temperature rises, as long as the reaction amount of the organosilicone compound is maintained.

### [Second step]

In this step, the silicon-containing oxide film (b) is formed by heating the aluminum nitride particles coated with the organosilicon compound, or the particles containing the silicon-containing oxide film (b) coated with the organosilicon compound and an aluminum nitride particle.

The heating temperature during the heating in the second step is preferably 500°C or higher and 900°C or lower, more preferably 550°C or higher and 850°C or lower, and further preferably 600°C or higher and 800°C or lower. A general heating furnace can be used as long as the temperature can be maintained within the above temperature range.

When the heating in this second step is performed at a low temperature, a silica film is formed on the surface of the coating target, and silica-coated aluminum nitride particles can be produced. That is, the silicon-containing oxide film (b) is formed as a silica film. Further, when the heating in the second step is performed at a high temperature, a film of a composite oxide of the element silicon and the element aluminum is formed on the surface of the coating target, and aluminum nitride particles coated with a composite oxide of the element silicon and the element aluminum can be produced. That is, the silicon-containing oxide film (b) is formed as a film of a composite oxide of the element silicon and the element aluminum. When the temperature in the second step is increased, it is inferred that the aluminum contained in the coating target comes to the surface of the coating target, thereby forming a composite oxide with the silicon derived from the organosilicon compound, so that a film of a composite oxide of the element silicon and the element aluminum is formed.

From the viewpoint of maintaining the high thermal conductivity of the aluminum nitride particles and producing an aluminum nitride filler having excellent moisture resistance, the silicon-containing oxide film (b) is preferably a silica film.

Silica coating means coating with a thin film containing silica as a main component. However, since there is a possibility that a plurality of inorganic composites may be present in the interfaces between coated silica and the aluminum nitride particles, in the case of analysis by ToF-SIMS (time-of-flight secondary ion mass spectrometry; manufactured by IONTOF Japan, TOF. SIMS5), there are also cases where decomposition or the like at the time of the recombination of secondary ions and ionization also overlaps and the segments of an AlSiO₄ ion, a SiNO ion and the like are detected at the same time as accessory components. These composite segments that are analyzed by the ToF-SIMS analysis can also be defined as partial detected objects in a case where aluminum nitride is silicated. As a rough standard, in a state where the secondary electron amount of silica is larger than other fractions, silica can be regarded as the main component.

Further, as an experiment for confirming the purity of silica by increasing accuracy, the surface of a sample having a silica film formed by the same method on an aluminum nitride polycrystalline substrate is measured by an X-ray photoelectron spectroscopy (XPS; ULVAC-PHI, Incorporated, Quantera II), and almost all of the sample is assumed to have a SiO₂ structure from the fact that the kinetic energies of Si-derived photoelectrons that are detected almost match the standard peak of silica, that is, 103.7 eV. Depending on the heating temperature, there may be cases where an organic component remains. There is a sufficient possibility that an organic siloxane component may be present in a mixed form to an extent that the effect of the present invention is not impaired.

The content of carbon atoms can be measured with a carbon/sulfur analyzer or the like for which a non-dispersive infrared absorption method with a tubular electric furnace is used. Specifically, the content of carbon atoms can be measured using a carbon analyzer (EMIA-821: manufactured by Horiba, Ltd.).

When the heating temperature (heat treatment temperature) in the second step is 500°C or higher, moisture resistance is improved, possibly because the silicon-containing oxide film (b) becomes denser, making it more difficult for moisture to permeate. Further, when heated at 1000°C or lower, thermal conductivity and moisture resistance are good. Moreover, when the heating temperature is 500°C or higher and 1000°C or lower, the silicon-containing oxide film (b) is uniformly formed on the surface of the coating target. In addition, if the heating temperature is 500°C or higher, the silicon-containing oxide film (b) has excellent insulation properties, and if the heating temperature is 1000°C or lower, it is effective in terms of energy costs.

The heating time is preferably 2 hours or longer and 10 hours or shorter, more preferably 2 hours or longer and 8 hours or shorter, and further preferably two hours or longer and 7 hours or shorter. The thermal treatment time is preferably 2 hours or longer since there is no remaining decomposition product of the organic group (the alkyl group having 4 or less carbon atoms) of the organosilicone compound, and a silicon-containing oxide film (b) having an extremely small carbon atom content can be obtained on the aluminum nitride particle surface. In addition, the heating time is preferably set to 7 hours or shorter since it is possible to produce a silicon-containing oxide film (b) with good production efficiency.

The atmosphere for the heat treatment in the second step is not particularly limited, and the heat treatment may be performed, for example, under an inert gas atmosphere of N₂, Ar, He or the like, under an atmosphere containing a reducing gas such as H₂, CO or CH₄, or under an atmosphere containing oxygen gas, for example, in the atmosphere (in the air).

In addition, in order to further enhance the moisture resistance, the first step and the second step may be further performed in order after the heat treatment of the second step. That is, a step of performing the first step and the second step in order may be repeatedly executed.

The coating method of covering the surface of the coating target with the organosilicone compound by the vapor-phase adsorption method in the first step is preferable since it enables the formation of a thinner and more uniform silicon-containing oxide film (b) than a coating method carried out using a liquid treatment. Therefore, even when the step of performing the first step and the second step in order is repeated, for example, approximately 2 to 5 times, it is possible for the aluminum nitride particles to exhibit good thermal conductance.

Incidentally, regarding the moisture resistance, a positive correlation is found between the number of times of the step of performing the first step and the second step in order and the moisture resistance. Therefore, it is possible to freely select the number of times of the step of performing the first step and the second step in order depending on the level of moisture resistance that is required in actual use.

### [Third step]

In this step, an organosilicone compound film (c) having a silanol group is formed by coating the aluminum nitride particles with an organosilicone compound having an active hydrogen by vapor deposition, and treating with a basic substance. The organosilicone compound film (c) may be formed adjacent to the aluminum nitride particles. After forming the silicon-containing oxide film (b) on the surface of the aluminum nitride particles, the organosilicone compound film (c) may be formed on the surface opposite to the surface where the silicon-containing oxide film (b) is in contact with the aluminum nitride particles. That is, the organosilicone compound film (c) may be formed on the surface of aluminum nitride particles, or on the surface of particles containing the silicon-containing oxide film (b) and an aluminum nitride particle.

Further, the organosilicone compound film (c) is preferably adjacent to the film (a) from the perspective of suppressing a decrease in the interfacial adhesive strength between the resin contained in the resin composition and the aluminum nitride filler.

In this step, examples of the method for coating with the organosilicone compound having an active hydrogen by vapor deposition include the same method as the method for coating with the organosilicone compound by vapor deposition in the first step. Further, when the aluminum nitride filler contains the silicon-containing oxide film (b), the organosilicone compound used in this step may be the same as or different from the organosilicone compound used in the first step.

From the viewpoint of improving adhesive strength, the organosilicone compound used in this step is preferably an organosilicone compound containing the structure represented by the above formula (1).

Further, when the aluminum nitride particles are coated with an organosilicone compound having an active hydrogen by vapor deposition, the aluminum nitride particles may be coated also with a component other than the organosilicone compound having the active hydrogen. That is, the coating film applied by vapor deposition may contain a component other than the organosilicone compound having an active hydrogen, or may be formed from the organosilicone compound.

In this step, after performing coating with the organosilicone compound by vapor deposition, the -Si-H group (active hydrogen group) of the organosilicone compound is converted into an -Si-OH group (silanol group) by treating with a basic substance.

The basic substance may be from a weak base to a strong base, from a Bronsted base to Lewis base, and is not particularly limited as long as an aqueous base solution that is so strong that solid content remains is not used. Examples thereof include ammonia water, monoethylamine, diethylamine, triethylamine, 2-ethanolamine, and the like. From the viewpoint of ease of separation, ammonia water is preferable.

As the method of treating with a basic substance, an immersion method or a vapor-phase deposition method can be used.

### (Immersion method)

The immersion method is a deposition method in which the organosilicone compound applied by vapor deposition is immersed into an aqueous solution of a basic substance, causing the basic substance to react with the organosilicone compound, to thereby convert an -Si-H group (active hydrogen group) into an -Si-OH group (silanol group).

The aqueous solution of a basic substance is preferably ammonia water.

In the immersion method, the concentration of the basic substance is not particularly limited, but, for example, when ammonia water is used as the basic substance, from the viewpoint of the reaction rate, the concentration is preferably 0.01 N or more and 10 N or less, and from the viewpoint of suppressing side reactions of the remaining organosilicone compound and reducing risk in the working environment, the concentration is more preferably 0.1 N or more and 5 N or less, and further preferably 0.5 N or more and 1.5 N or less.

The amount of the ammonia water is not particularly limited, but, for example, when the particle size (D50) of the aluminum nitride particles used in the reaction is 30 µm or more and 100 µm or less, the amount of ammonia water used in the treatment is preferably from one-third by mass or more to an equivalent amount by mass or less relative to the mass of the particles. Further, when the particle size (D50) is 0.1 µm or more and less than 30 µm, the amount of ammonia water used in the treatment is preferably one-half by mass or more to twice the amount by mass or less relative to the mass of the particles.

The immersion is not particularly limited as long as the whole of the particle, such as the whole of each aluminum nitride particle or each particle containing the silicon-containing oxide film (b) and an aluminum nitride particle, is immersed in the ammonia water. As the size of the particles becomes smaller, the wetting of the surface of the particles with the ammonia water immediately after immersion tends to be poorer, and so in such a case it is preferable to add the same amount of ethanol as the ammonia water. The addition of the ethanol improves wetting of the surface of the particles with the ammonia water, and the ethanol may be further added while stirring. The reaction may be carried out by constant stirring, but may also be satisfactorily carried out by intermittent manual mixing under static conditions. There is no particular limitation on the container for the manual mixing, but it is preferable to use a wide-mouthed polyethylene bottle having a volume that is approximately twice the total volume of the contents.

The treatment temperature is preferably 20°C or higher and 60°C or lower, but since a large amount of hydrogen is generated immediately after the treatment, for safety reasons it is preferable to start the treatment at 20°C.

The treatment time is preferably 20 hours or more and 30 hours or less, and more preferably 22 hours or more and 27 hours or less.

After the treatment with the basic substance, it is preferable to remove the basic substance by suction filtration using filter paper, wash the filtrate thoroughly with distilled water and then with ethanol to facilitate drying. From the viewpoint of facilitating drying, the filtrate may be washed with acetone. Alternatively, the filtrate may be dried by heating at 90 to 120°C for 2 to 4 hours.

### (Vapor-phase deposition method)

The vapor-phase deposition method is a deposition method in which a basic substance is deposited in a vapor-phase onto the organosilicone compound applied by vapor deposition using an aqueous solution of a basic substance, causing the basic substance to react with the organosilicone compound, to thereby convert an -Si-H group (active hydrogen group) into an -Si-OH group (silanol group).

The aqueous solution of a basic substance is preferably ammonia water.

In the vapor-phase deposition method, the concentration of the basic substance is not particularly limited, but, for example, when ammonia water is used as the basic substance, it is preferable to carry out the vapor-phase deposition in an airtight container with a gas vent hole in an open state, in a place where local ventilation can be achieved. The concentration is preferably 0.01 N or more and 10.0 N or less, and from the viewpoint of suppressing side reactions of the remaining organosilicone compound and reducing risk in the working environment, the concentration is more preferably 0.10 N or more and 5.0 N or less, and further preferably 0.50 N or more and 1.50 N or less.

In the case of the vapor-phase deposition method, the reaction rate is lower than in the immersion method using ammonia water, and therefore the treatment temperature is preferably 20°C or higher and 80°C or lower, more preferably 20°C or higher and 70°C or lower, and further preferably 30°C or higher and 60°C or lower.

The treatment time in the vapor-phase deposition method using ammonia water is from 24 to 48 hours when the treatment temperature is 20°C, but the treatment time can be shortened by increasing the treatment temperature. For example, when the treatment is performed at 50°C, sufficient silanol groups can be introduced in 4 to 5 hours.

In this step, it is preferable to form the organosilicone compound film (c) by a vapor-phase deposition method, since the filtration and drying steps can be omitted and production can be performed efficiently.

### [Fourth step]

In this step, a film (a) is formed. The film (a) is formed on the aluminum nitride particle, or a particle containing the silicon-containing oxide film (b) and an aluminum nitride particle, or a particle containing the organosilicone compound film (c) and an aluminum nitride particle, or a particle containing the silicon-containing oxide film (b), the organosilicone compound film (c), and an aluminum nitride particle (hereinafter sometimes simply referred to as "particles"). For example, when the film (a) is formed on an aluminum nitride particle, an aluminum nitride filler containing aluminum nitride particles and the film (a) can be produced.

The method for forming the film (a) is not particularly limited, but it is preferably formed by an impregnation method or an integral method, and more preferably by an impregnation method from the viewpoint of more effectively obtaining the effects of the present invention.

### (Impregnation method)

The impregnation method is a deposition method in which the film (a) is formed on the surface of the particles by immersing the particles in a solution containing the compound (A).

Examples of solvents that can be used in the solution containing the compound (A) include isopropanol, 1-methoxy-2-propanol, ethylene glycol monomethyl ether, dioxolane, and the like. Among these, isopropanol is preferable from the viewpoint of a balance between volatility and solubility and from the viewpoint of low toxicity.

The content of the compound (A) in the solution containing compound (A) is, from the viewpoint of efficiently forming the film (a), preferably from 8 to 30% by mass, more preferably from 10 to 25% by mass, and further preferably from 15 to 20% by mass.

The solution containing the compound (A) may contain a component other than the compound (A).

In the impregnation method, the time for impregnating the particles is preferably from 10 to 60 minutes, more preferably from 15 to 50 minutes, and further preferably from 20 to 40 minutes.

After impregnating, the solution may be heated at from 100 to 150°C for 1 to 3 hours to remove the solvent.

### (Integral method)

The integral method is a deposition method in which a resin such as an epoxy resin and a compound (A) are mixed, and then the film (a) is formed on the surface of the aluminum nitride particle, or a particle containing the silicon-containing oxide film (b) and an aluminum nitride particle, or a particle containing the organosilicone compound film (c) and an aluminum nitride particle, or a particle containing the silicon-containing oxide film (b), the organosilicone compound film (c), and an aluminum nitride particle by admixing those particles to the mixture.

As the resin to be mixed with the compound (A), a resin such as an epoxy resin, a phenol resin, a phenol novolak resin, a urethane resin, an acrylic resin, an epoxy phenol resin, an epoxy urethane resin, and an epoxy acrylic resin can be used, but an epoxy-based resin is preferably used.

The content of the compound (A) in the mixture obtained by mixing a resin such as an epoxy resin and the compound (A) is, from the viewpoint of more effectively obtaining the effects of the present invention, preferably from 0.03 to 3.0% by mass, more preferably from 0.05 to 1.5% by mass, and further preferably from 0.08 to 0.8% by mass.

When a mixture obtained by mixing a resin such as the epoxy resin and the compound (A) is used as the resin composition described later, the content of the compound (A) in the mixture obtained by mixing the resin such as an epoxy resin and the compound (A) is, from the viewpoint of more effectively obtaining the effects of the present invention, preferably from 0.03 to 3.0% by mass, more preferably from 0.05 to 1.5% by mass, and further preferably from 0.08 to 0.8% by mass.

From the viewpoint of more effectively obtaining the effects of the present invention, the amount of the particles added is such that the content of the particles in the resulting resin composition is preferably from 50 to 90% by mass, more preferably from 55 to 85% by mass, and further preferably from 60 to 80% by mass.

When producing the aluminum nitride filler containing the aluminum nitride particles, the film (a), and the silicon-containing oxide film (b), the method for producing the aluminum nitride filler preferably includes a first step of performing coating with an organosilicone compound having an active hydrogen, a second step of forming the silicon-containing oxide film (b) by heating, and a fourth step of forming the film (a).

When producing the aluminum nitride filler containing the aluminum nitride particles, the film (a), and the organosilicone compound film (c), the method for producing the aluminum nitride filler preferably includes a third step of forming the organosilicone compound film (c) having a silanol group by performing coating with an organosilicone compound having an active hydrogen by vapor deposition and treating with a basic substance, and a fourth step of forming the film (a).

When producing the aluminum nitride filler containing the aluminum nitride particles, the film (a), the silicon-containing oxide film (b), and the organosilicone compound film (c), the method for producing the aluminum nitride filler preferably includes a first step of performing coating with an organosilicone compound having an active hydrogen, a second step of forming the silicon-containing oxide film (b) by heating, a third step of forming the organosilicone compound film (c) having a silanol group by performing coating with an organosilicone compound having an active hydrogen by vapor deposition and treating with a basic substance, and a fourth step of forming the film (a).

### <Resin composition>

The resin composition according to the present invention includes the aluminum nitride filler according to the present invention and an epoxy resin.

Since the resin composition according to the present invention contains the aluminum nitride filler of the present invention, an increase in viscosity is suppressed and a decrease in adhesive strength after curing is also suppressed.

In addition to the aluminum nitride filler according to the present invention, the resin composition may also contain commonly used fillers such as boron nitride, alumina, silica, and zinc oxide.

Examples of the epoxy resin include a bifunctional glycidyl ether epoxy resin such as a bisphenol A epoxy resin, a bisphenol F epoxy resin, a bisphenol S epoxy resin, a hydrogenerated bisphenol A epoxy resin, and a biphenyl epoxy resin; a glycidyl ester epoxy resin such as a hexahydrophthalic acid glycidyl ester and a dimer acid glycidyl ester; a linear aliphatic epoxy resin such as epoxidized polybutadiene and epoxidized soybean oil; a heterocyclic epoxy resin such as triglycidyl isocyanurate; a glycidyl amine epoxy resin such as N,N,N',N'-tetraglycidyl-4,4'-diaminodiphenylmethane, N,N,N',N'-tetraglycidyl-1,3-benzenedi(methanamine), 4-(glycidyloxy)-N,N-diglycidyl aniline, and 3-(glycidyloxy)-N,N-diglycidyl aniline; a polyfunctional glycidyl ether epoxy resin such as a phenol novolak epoxy resin, a cresol novolak epoxy resin, a biphenylaralkyl epoxy resin, a naphthalenearalkyl epoxy resin, a tetrafunctional naphthalene epoxy resin, and a triphenylmethane epoxy resin; and the like. These epoxy resins may be used alone or as a mixture of two or more.

The viscosity-reducing effect can be obtained most preferably when the film (a) containing the compound (A) is used in combination with a bisphenol A type epoxy resin. As the resin component in the resin composition, a bisphenol A epoxy resin may be used alone, a bisphenol A epoxy resin and an epoxy resin other than the bisphenol A epoxy resin may be used in combination, or a bisphenol A epoxy resin and a phenol novolac resin may be used in combination.

When the above-described epoxy resin is used, a curing agent or a curing accelerator may be added. Examples of the curing agent include an alicyclic acid anhydride such as methyltetrahydrophthalic anhydride, methylhexahydrophthalic anhydride, and himic acid anhydride; an aliphatic acid anhydride such as dodecenyl succinic anhydride; an aromatic acid anhydride such as phthalic anhydride and trimellitic anhydride; a bisphenol such as bisphenol A, bisphenol F, and bisphenol S; a phenol resin such as a phenol formaldehyde resin, a phenol aralkyl resin, a naphthol aralkyl resin, and a phenol-dicyclopentadiene copolymer resin; an organic dihydrazide such as dicyandiamide and adipic acid dihydrazide. Examples of the curing catalyst include an amine such as tris(dimethylaminomethyl)phenol, dimethylbenzylamine, 1,8-diazabicyclo(5,4,0)undecene, and derivatives thereof; an imidazole such as 2-methylimidazole, 2-ethyl-4-methylimidazole, and 2-phenylimidazole, and derivatives thereof. These may be used alone or in combination of two or more.

The resin composition according to the present invention may contain a resin other than the epoxy resin. From the viewpoint of the resulting resin composition having excellent heat resistance, the resin other than the epoxy resin is preferably a thermosetting resin, a thermoplastic resin, or a mixture of a thermosetting resin and a thermoplastic resin. Examples of the thermosetting resin include a silicone resin such as polydimethylsiloxane, a phenol resin, a bismaleimide resin, a cyanate resin, a urethane resin, a (meth)acrylic resin, a vinylester resin, an unsaturated polyester resin, a polyvinyl alcohol acetal resin, and the like. These may be used alone or as a mixture of two or more. In addition, a mixture may be used in which a curing agent or a curing accelerator has been added to the thermosetting resin.

In addition, silicone resins include addition reaction-curable silicone resins, condensation reaction-curable silicone resins, organic peroxide-curable silicone resins, and the like. These silicone resins may be used alone or in combination of two or more having different viscosities. In particular, when the resulting resin composition is used for applications in which flexible adhesiveness is important, examples of the silicone resin include an addition reaction-curable liquid silicone resin in which no by-products that might act as a causative substance for air bubbles and the like are produced. A cured product of the silicone resin can be obtained by reacting an alkenyl group-containing organopolysiloxane, which serves as a base polymer, with an Si-H group-containing organopolysiloxane, which serves as a cross-linking agent, at ordinary temperature or an elevated temperature in the presence of a curing agent. Specific examples of the organopolysiloxane serving as a base polymer include an organopolysiloxane having, as the alkenyl group, a vinyl group, an allyl group, a propenyl group, a hexenyl group, and the like. In particular, a vinyl group is preferable for the organopolysiloxane. Further, as the curing catalyst, for example, a platinum metal-based curing catalyst may be used. The amount added may also be adjusted to achieve a desired hardness of the cured resin.

The resin composition according to the present invention may additionally contain additives such as a flexibility-conferring agent such as silicone, urethane acrylate, a butyral resin, an acrylic rubber, a diene rubber, and copolymers thereof, a silane coupling agent, a titanium coupling agent, an inorganic ion scavenger, a pigment, a dye, a diluent, and a solvent.

The total content of the aluminum nitride filler and fillers other than the aluminum nitride filler in the resin composition is not particularly limited as long as the desired resin composition can be obtained, but the total amount is preferably 50% by mass or more and 90% by mass or less, more preferably 60% by mass or more and 88% by mass or less, and further preferably 70% by mass or more and 85% by mass or less. If the total content is 50% by mass or more, good heat dissipation properties can be exhibited, and if the total content is 90% by mass or less, good workability can be obtained when the resin composition is used.

Further, the content of the aluminum nitride filler in the components (filler) other than the resin component of the resin composition is, of the total content of the aluminum nitride filler and fillers other than the aluminum nitride filler, preferably 30% by mass or more and 100% by mass or less, more preferably 40% by mass or more and 100% by mass or less, and further preferably 50% by mass or more and 100% by mass or less. If the total content is 30% by mass or more, good heat dissipation properties can be exhibited.

The total content of the epoxy resin and resin other than the epoxy resin in the resin composition is not particularly limited as long as the desired resin composition can be obtained, but the total is preferably 1% by mass or more and 50% by mass or less, more preferably 3% by mass or more and 40% by mass or less, and further preferably 5% by mass or more and 30% by mass or less. If the total content is 50% by mass or less, good heat dissipation properties can be exhibited, and if the total content is 1% by mass or more, good workability can be obtained when the resin composition is used.

Further, the content of the epoxy resin in the resin composition is, of the total content of the epoxy resin and resin other than the epoxy resin, preferably 30% by mass or more and 100% by mass or less, more preferably 35% by mass or more and 100% by mass or less, and further preferably 40% by mass or more and 100% by mass or less. If the total content is 30% by mass or more, the increase in viscosity when mixed with the epoxy resin can be further suppressed, and the decrease in adhesive strength after curing of the epoxy resin-containing resin composition can be suppressed.

### <Method for producing resin composition>

The method for producing the resin composition according to the present invention preferably includes the following step I, or the following steps II-1 and II-2.
Step I: A step of admixing the aluminum nitride filler to the epoxy resin
Step II-1: A step of obtaining a composition i containing the compound (A) and the epoxy resin
Step II-2: A step of admixing, to the composition i, at least one particle selected from an aluminum nitride particle, a particle containing a silicon-containing oxide film (b) and an aluminum nitride particle, a particle containing an organosilicone compound film (c) and an aluminum nitride particle, and a particle containing a silicon-containing oxide film (b), an organosilicone compound film (c), and an aluminum nitride particle.

In the following, step I, and steps II-1 and II-2, will be described.

### [Step I]

This step is a step of admixing the aluminum nitride filler according to the present invention to an epoxy resin. The resin composition can be obtained through this step.

Examples of the epoxy resin include the epoxy resins described in <Resin composition> above.

In this step, the other components described in the above <Resin composition> other than the compound (A) and the epoxy resin may be added.

The mixing method is not particularly limited, and a method may be used in which, for example, components such as the aluminum nitride filler according to the present invention, the epoxy resin, resin other than the epoxy resin, filler such as boron nitride, alumina, silica, zinc oxide, and other additives are all at once or in portions mixed, dissolved, and kneaded, with heating if required, using a dispersing/dissolving machine such as a stone mill, a planetary mixer, a planetary centrifugal mixer, a kneader, and a roll mill alone or in combination as appropriate.

From the viewpoint of efficiently forming the film (a), it is preferable that the method for producing a resin composition includes step I.

### [Step II-1]

This step is a step of obtaining a composition i containing the compound (A) and an epoxy resin, and the composition i is obtained by mixing the compound (A) and the epoxy resin.

Examples of the epoxy resin include the epoxy resins described in <Resin composition> above.

In this step, the composition i may be obtained by admixing the other components described in the above <Resin composition> other than the compound (A) and the epoxy resin.

There is no particular limitation on the mixing method in the mixing step, but, for example, a method may be used in which the compound A, the epoxy resin, resin other than the epoxy resin, other additives, and the like are all at once or in portions mixed, dissolved, and kneaded, with heating if required, using a dispersing/dissolving machine such as a stone mill, a planetary mixer, a planetary centrifugal mixer, a kneader, and a roll mill alone or in combination as appropriate.

### [Step II-2]

In this step, at least one particle selected from an aluminum nitride particle, a particle containing a silicon-containing oxide film (b) and an aluminum nitride particle, a particle containing an organosilicone compound film (c) and an aluminum nitride particle, and a particle containing a silicon-containing oxide film (b), an organosilicone compound film (c), and an aluminum nitride particle is admixed to the composition i. By admixing at least one particle, the film (a) can be formed on the surface of the particle.

There is no particular limitation on the mixing method in the mixing step, and a method may be used in which the components to be mixed are all at once or in portions mixed, dissolved, and kneaded, with heating if required, using a dispersing/dissolving machine such as a stone mill, a planetary mixer, a planetary centrifugal mixer, a kneader, and a roll mill alone or in combination as appropriate.

### <Applications of resin composition>

The resin composition obtained in step I, or in the following step II-1 and II-2, can also be molded in a sheet shape and reacted as necessary to produce a heat dissipation sheet. The above-described resin composition and heat dissipation sheet can be preferably used for adhesion and the like of semiconductor power devices, power modules and the like.

Examples of a method for producing the heat dissipation sheet include a method in which the resin composition is molded with a compression press or the like in a manner that both surfaces are sandwiched with base material films, a method in which the resin composition is applied onto a base material film using a device such as a bar coater, screen printing, a blade coater, a die coater or a comma coater and the like. Further, for the heat dissipation sheet after molding and application, it is also possible to add a step of removing a solvent, B-staging by heating or the like or a treatment step of complete curing or the like. As described above, a variety of forms of heat dissipation sheets can be obtained depending on the step(s) that are used, and it becomes possible to widely deal with intended fields of use and methods of use.

It is possible to use a solvent to improve workability at the time of applying or forming the resin composition on the base material film. The solvent is not particularly limited, and it is possible to use one or a mixture of two or more of a ketone-based solvent such as acetone, methyl ethyl ketone, methyl isobutyl ketone, cyclopentanone or cyclohexanone; an ether-based solvent such as 1,4-dioxane, tetrahydrofuran or diglyme; a glycol ether-based solvent such as methyl cellosolve, ethyl cellosolve, propylene glycol monomethyl ether, propylene glycol monoethyl ether, propylene glycol monobutyl ether, propylene glycol monomethyl ether acetate, propylene glycol monoethyl ether acetate or diethylene glycol methyl ethyl ether; other benzyl alcohol; N-methylpyrrolidone; γ-butyrolactone; ethyl acetate; N,N-dimethylformamide; and the like.

In order to form the resin composition in a sheet shape, sheet formability that holds the sheet shape becomes necessary. In order to obtain sheet formability, it is possible to add a high-molecular-weight component to the resin composition. Examples thereof include a phenoxy resin, a polyimide resin, a polyamide resin, a polycarbodiimide resin, a cyanate ester resin, a (meth)acrylic resin, a polyester resin, a polyethylene resin, a polyether sulfone resin, a polyetherimide resin, a polyvinyl acetal resin, a urethane resin, acrylic rubber and the like. Among these, from the viewpoint of excellent heat resistance and film formability, a phenoxy resin, a polyimide resin, a (meth)acrylic resin, acrylic rubber, a cyanate ester resin, a polycarbodiimide resin and the like are preferable, and a phenoxy resin, a polyimide resin, a (meth)acrylic resin and acrylic rubber are more preferable. These can be used alone or as a mixture or copolymer of two or more thereof.

The weight average molecular weight of the high-molecular-weight component is preferably 10000 or more and 100000 or less, and more preferably 20000 or more and 50000 or less.

A favorable sheet shape having favorable handleability can be held by adding a component having a weight average molecular weight within the above-described range.

The amount of the high-molecular-weight component added is not particularly limited, but is preferably 0.1% by mass or more and 20% by mass or less, more preferably 1% by mass or more and 15% by mass or less and further preferably 2% by mass or more and 10% by mass or less with respect to the resin composition in order to maintain the sheet physical properties. When 0.1% by mass or more and 20% by mass or less of the high-molecular-weight component is added, the handleability is also favorable, and a favorable sheet or film is formed.

The base material film that is used during the production of the heat dissipation sheet is not particularly limited as long as the base material film is capable of withstanding the conditions for heating, drying and the like during the production steps. Examples thereof include films made of a polyester having an aromatic ring such as polyethylene terephthalate (PET) or polybutylene terephthalate (PBT), a polypropylene film, a polyimide film, a polyetherimide film and the like. The above-described film may be a multilayer film in which two or more films are combined together or may be a film having a surface treated with a silicone-based or other mold release agent. The thickness of the base material film is preferably 10 µm or more and 100 µm or less.

The thickness of the heat dissipation sheet formed on the base material film is preferably 20 µm or more and 500 µm or less and more preferably 50 µm or more and 200 µm or less. When the thickness of the heat dissipation sheet is 20 µm or more, a heat dissipation sheet having a uniform composition can be obtained, and, when the thickness is 500 µm or less, favorable heat dissipation properties can be obtained.

### [Examples]

Next, the present invention will be specifically described using examples, but the present invention is not limited to these examples.

### [Weight average molecular weight]

The weight average molecular weight of the compound (A) and the surface treatment agent was measured by matrix-assisted laser desorption ionization time-of-flight mass spectrometry (MALDI-TOF MS). Specifically, the measurement was performed a total of 1500 times using an "autoflex (registered trademark) max" (manufactured by Bruker Japan Co., Ltd.) as the measuring device and a tetrahydrofuran solution containing 1 mol/L of sodium trifluoroacetate as an ionizing reagent.

### [Compound (A) amount and surface treatment agent amount (g/m²)]

The compound (A) amount and the surface treatment agent amount (g/m²) were determined by dividing the compound (A) amount used in the examples or the surface treatment agent amount (g) used in the comparative examples by the BET specific surface area of the particles measured by the nitrogen adsorption BET single-point method using a specific surface area measuring device (manufactured by Mountec Co., Ltd., trade name: Macsorb HM model-1210). A mixed gas of 70% by volume He and 30% by volume N₂ was used as the adsorption gas during the measurement of the specific surface area.

Further, the term "particles" used above refers to the particles used when forming the film (a), and means an aluminum nitride particle, or a particle containing the silicon-containing oxide film (b) and an aluminum nitride particle, or a particle containing the organosilicone compound film (c) and an aluminum nitride particle, or a particle containing the silicon-containing oxide film (b), the organosilicone compound film (c), and an aluminum nitride particle.

### [Viscosity]

The viscosity of the resin composition was measured using a flow tester (manufactured by Shimadzu Corporation, model name: "CFT-EX") with a nozzle of φ2×2 mmL, 30°C, and a load of 25 kg.

### [Thermal conductance]

20.00 g of the aluminum nitride filler obtained in Examples 1 to 11 and Comparative Examples 6 to 11, or the aluminum nitride particles used in Comparative Example 1, or the particles obtained in Comparative Examples 2 to 5, 4.74 g of a bisphenol A epoxy resin (trade name: YD-128, manufactured by Nippon Steel & Sumikin Chemical Co., Ltd.), and 0.02 g of 2-ethyl-4-methylimidazole (trade name: 2E4MZ, manufactured by Shikoku Chemicals Corporation) as a curing agent were weighed into a container (volume 300 mL) for a planetary centrifugal mixer (trade name: Awatori Rentaro atmospheric pressure type ARE-310, manufactured by Thinky Co., Ltd.), and an operation in which stirring was performed for 30 seconds at 2000 rpm using the planetary centrifugal mixer followed by manual stirring was repeated twice, to thereby prepare a raw material for pressing. This raw material for pressing was filled into filling a metal mold of 30 mm × 30 mm × 0.3 mm, the upper and lower surfaces were then sandwiched between 30 mm-thick copper foil, the sides were sandwiched between 5 mm-thick SUS flat plates, and press molding was carried out at 150°C for 30 minutes to create a flat sample with a solid volume ratio of 60% by volume. This flat sample was cut into a size of 10 mm × 10 mm and used as a measurement specimen.

Next, using the obtained measurement specimen, thermal diffusivity was measured using a xenon laser flash method thermal diffusivity measuring device (trade name: LFA447 NanoFlash, manufactured by NETZSCH). The obtained thermal diffusivity was multiplied by the theoretical values for the specific heat and density of each measurement specimen, and the calculated value was taken as the thermal conductance in the thickness direction of the measurement specimen.

### [Materials]

The details of the aluminum nitride particles used in the examples and comparative examples are shown in Table 1, and the details of the compounds used to form the film and the compounds used to evaluate adhesive strength are shown in Table 2.

### [Table 1]

**Table 1**

| Aluminum nitride particles | Trade name | Manufacturer | D50 [µm] | Standard BET value |
|---|---|---|---|---|
| I | TOYAL TecFiller(R) TFZ-N01P | Toyo Aluminum K.K. | 1.0 | 2.7 |
| II | TOYAL TecFiller(R) TFZ-S20P | Toyo Aluminum K.K. | 20.0 | 0.15 |
| III | High thermal conductivity AIN filler FAN-f80-A1 | Furukawa Electric Co., Ltd. | 80.0 | 0.07 |

### [Table 2]

**Table 2**

| | Compound | Trade name | Manufacturer | Weight average molecular weight |
|---|---|---|---|---|
| Compound (A) | a | Esleam(R) AD-374M | NOF Corporation | 4300 |
| | b | Esleam(R) AD-508E | NOF Corporation | 8600 |
| Surface treatment agent^{*1} | c | Malialim AWS-0851 | NOF Corporation | over 10000 |
| | d | Esleam(R) 221P | NOF Corporation | less than 1000 |
| | e | Esleam(R) C-2091l | NOF Corporation | less than 1000 |
| | f | Esleam(R) C-2093l | NOF Corporation | less than 1000 |
| | g | DISPERBYK-106 | BYK Chemie Japan | - |
| | h | KBM-403 | Shin-Etsu Chemical Co., Ltd. | 236 |

| | | | | |
|---|---|---|---|---|
| *1: Surface treatment agent that is not compound (A) | | | | |

The details of the alumina particles and the epoxy resin used in the examples and comparative examples are as follows.
- AA-3: High-purity alumina (trade name: Advanced Alumina, AA-3, manufactured by Sumitomo Chemical Co., Ltd., D50 = 0.40 mm)
- AKP-30: High-purity alumina (trade name: AKP Series, AKP-15, manufactured by Sumitomo Chemical Co., Ltd., D50 = 0.26 mm)
- Epoxy resin YD-128: Bisphenol A epoxy resin (trade name: YD-128, manufactured by Nippon Steel & Sumikin Chemical Co., Ltd.)

### [Example 1]

### (Production of aluminum nitride filler)

A mixed solution was prepared by dissolving 0.85 g of compound a (compound (A)) (amount such that the content of film (a) in the aluminum nitride filler was 1.70 parts by mass with respect to 100 parts by mass of aluminum nitride particles I = amount equivalent to 6.3×10⁻³ g per 1 m² of surface area of the aluminum nitride particles I) in 5 g of isopropanol. Next, 50 g of aluminum nitride particles I was weighed into a 500 mL evaporating dish, and the mixed solution was added in three portions, stirred and mixed each time. After the addition, stirring, and mixing had been performed for about 3 minutes, the mixture was cured and air-dried at room temperature for 2 hours. Then, a heat treatment was performed at 120°C for 2 hours to form film (a), thereby obtaining an aluminum nitride filler X-1.

### (Production of resin composition)

27.00 g of the aluminum nitride filler X-1 and 9.99 g of the epoxy resin YD-128 were weighed into a container (volume 150 mL) for a planetary centrifugal mixer (trade name: Awatori Rentaro atmospheric pressure type ARE-310, manufactured by Thinky Co., Ltd.), stirred for 30 seconds at 2000 rpm using the planetary centrifugal mixer, and then manually stirred for 20 seconds using a medicine spoon. The above stirring was performed three times to obtain a resin composition X-1.

Table 3 shows the evaluation results of the physical properties of the resin composition X-1.

### [Example 2]

### (Production of aluminum nitride particles)

27.00 g of the aluminum nitride particles I were uniformly spread on a stainless steel tray and left in a large oven having a reaction vessel with inner capacity of 250 L. Next, in the reaction vessel, 340 g of organosilicone compound (1) (trade name: 2,4,6,8-tetramethylcyclotetrasiloxane, manufactured by Tokyo Chemical Industry Co., Ltd.) where n=4 in formula (3) was placed in a glass petri dish, left in the reaction tank, and the reaction vessel was closed. Since the reaction generates hydrogen gas, the inside of the reaction vessel was evacuated in advance until the oxygen concentration was 8% by volume or less, which is the explosion limit. Then, nitrogen gas was made to flow into the reaction vessel, and the internal pressure was returned to normal pressure (0.1 MPa). After that, the reaction vessel was heated to 80°C in 7.5 hours to vaporize the organosilicone compound (1), thereby obtaining particles coated with an organosilicone compound.

The obtained particles coated with an organosilicone compound were placed in an alumina crucible and heated in air at 700°C for 3 hours to obtain particles X-2 containing aluminum nitride particles and one layer of silicon-containing oxide film (b).

Next, an aluminum nitride filler X-2 was obtained by forming the film (a) in the same manner as Example 1, except that the particles X-2 were used instead of the aluminum nitride particles I. In addition, the compound a was used in amount such that the content of film (a) in the aluminum nitride filler was 1.70 parts by mass with respect to 100 parts by mass of particles X-2 (amount equivalent to 6.3×10⁻³ g per 1 m² of surface area of particles X-2).

### (Production of resin composition)

A resin composition X-2 was obtained in the same manner as Example 1, except that the aluminum nitride filler X-2 was used instead of the aluminum nitride filler X-1.

Table 3 shows the evaluation results of the physical properties of the resin composition X-2.

### [Example 3]

### (Production of aluminum nitride filler)

Particles X-3 containing two layers of silicon-containing oxide film (b) were obtained by, in Example 2, after forming one layer of silicon-containing oxide film (b) on the aluminum nitride particles I, forming another layer of silicon-containing oxide film (b) on the surface of the silicon-containing oxide film (b) by the same operation.

Next, an aluminum nitride filler X-3 was obtained by forming the film (a) in the same manner as Example 1, except that the particles X-3 were used instead of the aluminum nitride particles I. In addition, the compound a was used in amount such that the content of film (a) in the aluminum nitride filler was 1.70 parts by mass with respect to 100 parts by mass of particles X-3 (amount equivalent to 6.3×10⁻³ g per 1 m² of surface area of particles X-3).

### (Production of resin composition)

A resin composition X-3 was obtained in the same manner as Example 1, except that the aluminum nitride filler X-3 was used instead of the aluminum nitride filler X-1.

Table 3 shows the evaluation results of the physical properties of the resin composition X-3.

### [Example 4]

### (Production of aluminum nitride filler)

11.0 g of organosilicone compound (1) in a ϕ50 glass petri dish was set in the lower portion of an 8 L pressure-resistant container made of SUS. Next, 200 g of the aluminum nitride particles I were placed into a tray made of aluminum foil, and set on a raised bottom drainboard made of SUS at the top of the 8L SUS pressure-resistant container. The lid of the 8 L pressure-resistant container was shut, and the 8 L pressure-resistant container was left to stand in an oven maintained at 80°C for 10 minutes in a sealed state. After releasing the pressure, a CVD treatment was performed for 4.5 hours in the oven maintained at 80°C in a sealed state.

Next, 200 g of 1 N ammonia water was charged into a 1 L polyethylene wide-mouthed bottle, the entire amount of the CVD-treated sample was added thereto. The mixture was manually stirred every hour for the first 3 hours, and then left to stand in equipment having local ventilation at room temperature for 24 hours. The polyethylene wide-mouthed bottle was not tightly capped while it was left to stand, allowing the generated hydrogen to leak out from a gap in the cap. After 24 hours, vacuum filtration was performed using filter paper coarse enough to maintain the particle size, the filtered material was washed twice with distilled water and twice with ethanol, and dried at 90°C for 2 hours to form an organosilicone compound film (c) having a silanol group, thereby obtaining particles X-4 containing organosilicone compound film (c).

Next, an aluminum nitride filler X-4 was obtained by forming the film (a) in the same manner as Example 1, except that the particles X-4 were used instead of the aluminum nitride particles I. In addition, the compound a was used in amount such that the content of film (a) in the aluminum nitride filler was 1.70 parts by mass with respect to 100 parts by mass of particles X-4 (amount equivalent to 6.3×10⁻³ g per 1 m² of surface area of particles X-4).

### (Production of resin composition)

A resin composition X-4 was obtained in the same manner as Example 1, except that the aluminum nitride filler X-4 was used instead of the aluminum nitride filler X-1.

Table 3 shows the evaluation results of the physical properties of the resin composition X-4.

### [Example 5]

### (Production of aluminum nitride filler)

Particles X-2 containing one layer of silicon-containing oxide film (b) were obtained in the same manner as Example 2.

Next, particles X-5 containing organosilicone compound film (c) were obtained by forming the organosilicone compound film (c) having a silanol group in the same manner as Example 4, except that the particles X-2 were used instead of the aluminum nitride particles I.

Next, an aluminum nitride filler X-5 was obtained by forming the film (a) in the same manner as Example 1, except that the particles X-5 were used instead of the aluminum nitride particles I. In addition, the compound a was used in amount such that the content of film (a) in the aluminum nitride filler was 1.70 parts by mass with respect to 100 parts by mass of particles X-5 (amount equivalent to 6.3×10⁻³ g per 1 m² of surface area of particles X-5).

### (Production of resin composition)

A resin composition X-5 was obtained in the same manner as Example 1, except that the aluminum nitride filler X-5 was used instead of the aluminum nitride filler X-1.

Table 3 shows the evaluation results of the physical properties of the resin composition X-5.

### [Example 6]

### (Production of aluminum nitride filler)

Particles X-3 containing two layers of silicon-containing oxide film (b) were obtained in the same manner as Example 3.

Next, particles X-6 containing organosilicone compound film (c) were obtained by forming the organosilicone compound film (c) having a silanol group in the same manner as Example 4, except that the particles X-3 were used instead of the aluminum nitride particles I.

Next, an aluminum nitride filler X-6 was obtained by forming the film (a) in the same manner as Example 1, except that the particles X-6 were used instead of the aluminum nitride particles I. In addition, the compound a was used in amount such that the content of film (a) in the aluminum nitride filler was 1.70 parts by mass with respect to 100 parts by mass of particles X-6 (amount equivalent to 6.3×10⁻³ g per 1 m² of surface area of particles X-6).

### (Production of resin composition)

A resin composition X-6 was obtained in the same manner as Example 1, except that the aluminum nitride filler X-6 was used instead of the aluminum nitride filler X-1.

Table 3 shows the evaluation results of the physical properties of the resin composition X-6.

### [Example 7]

### (Production of aluminum nitride filler)

An aluminum nitride filler X-7 was obtained in the same manner as Example 2, except that 0.25 g (amount such that the content of film (a) in the aluminum nitride filler was 0.50 parts by mass with respect to 100 parts by mass of particles X-2 = amount equivalent to 1.9×10⁻³ g per 1 m² of surface area of particles X-2) of compound a was used instead of 0.85 g.

### (Production of resin composition)

A resin composition X-7 was obtained in the same manner as Example 1, except that the aluminum nitride filler X-7 was used instead of the aluminum nitride filler X-1.

Table 3 shows the evaluation results of the physical properties of the resin composition X-7.

### [Example 8]

### (Production of aluminum nitride filler)

Particles X-8 were obtained in the same manner as Example 2, except for using the aluminum nitride particle II instead of the aluminum nitride particles I.

Next, an aluminum nitride filler X-8 was obtained in the same manner as Example 1 by forming film (a), except that 0.15 g (amount such that the content of film (a) in the aluminum nitride filler was 0.30 parts by mass with respect to 100 parts by mass of particles X-8 = amount equivalent to 1.2×10⁻² g per 1 m² of surface area of particles X-8) of compound b (compound (A)) was used instead of 0.85 g of compound a, and particles X-8 were used instead of the aluminum nitride particles I.

### (Production of resin composition)

20.00 g of the aluminum nitride filler X-8, 12.50 g of AA-3, 10.00 g of AKP-30, and 2.50 g of the epoxy resin YD-128 were weighed into a container (volume 150 mL) for a planetary centrifugal mixer (trade name: Awatori Rentaro atmospheric pressure type ARE-310, manufactured by Thinky Co., Ltd.), stirred for 30 seconds at 2000 rpm using the planetary centrifugal mixer, and then manually stirred for 20 seconds using a medicine spoon. The above stirring was performed three times to obtain a resin composition X-8.

Table 3 shows the evaluation results of the physical properties of the resin composition X-8.

### [Example 9]

### (Production of aluminum nitride filler)

Particles X-8 were obtained by operating in the same manner as Example 8.

Next, particles X-9 containing organosilicone compound film (c) were obtained by forming the organosilicone compound film (c) having a silanol group in the same manner as Example 4, except that the particles X-8 were used instead of the aluminum nitride particles I.

Next, an aluminum nitride filler X-9 was obtained by forming the film (a) in the same manner as Example 8, except that the particles X-9 were used instead of the aluminum nitride particles I. In addition, the compound a was used in amount such that the content of film (a) in the aluminum nitride filler was 0.30 parts by mass with respect to 100 parts by mass of particles X-9 (amount equivalent to 1.2×10⁻² g per 1 m² of surface area of particles X-9).

### (Production of resin composition)

A resin composition X-9 was obtained in the same manner as Example 8, except that the aluminum nitride filler X-9 was used instead of the aluminum nitride filler X-8.

Table 3 shows the evaluation results of the physical properties of the resin composition X-9.

### [Example 10]

### (Production of aluminum nitride filler)

An aluminum nitride filler X-10 was obtained in the same manner as Example 1, except that the film (a) was formed using 0.10 g (amount such that the content of film (a) in the aluminum nitride filler was 0.20 parts by mass with respect to 100 parts by mass of aluminum nitride III = amount equivalent to 2.9×10⁻² g per 1 m² of surface area of the aluminum nitride particles III) of compound a, and using the aluminum nitride particles III instead of aluminum nitride particles I.

### (Production of resin composition)

A resin composition X-10 was obtained in the same manner as Example 8, except that 17.62 g of the aluminum nitride filler X-10 was used instead of the aluminum nitride filler X-8, and that 11.10 g of AA-3, 9.08 g of AKP-30, and 2.16 g of the epoxy resin YD-128 were used.

Table 3 shows the evaluation results of the physical properties of the resin composition X-10.

### [Example 11]

### (Production of aluminum nitride filler)

An aluminum nitride filler X-11 was obtained in the same manner as Example 4, except that the film (a) was formed using 0.10 g (amount such that the content of film (a) in the aluminum nitride filler was 0.20 parts by mass with respect to 100 parts by mass of aluminum nitride particles III = amount equivalent to 2.9×10⁻² g per 1 m² of surface area of aluminum nitride III) of compound a, and using the aluminum nitride particles III instead of aluminum nitride particles I.

### (Production of resin composition)

A resin composition X-11 was obtained in the same manner as Example 10, except that the aluminum nitride filler X-11 was used instead of the aluminum nitride filler X-10.

Table 3 shows the evaluation results of the physical properties of the resin composition X-11.

### [Example 12]

A resin composition X-12 was obtained by weighing 9.99 g of the epoxy resin YD-128 and 0.06 g of compound a (amount such that the content of film (a) in the aluminum nitride filler was 0.22 parts by mass with respect to 100 parts by mass of the aluminum nitride I = amount equivalent to 8.0×10⁻⁴ g per 1 m² of surface area of the aluminum nitride I) of compound a into a container (volume 150 mL) for a planetary centrifugal mixer (trade name: Awatori Rentaro atmospheric pressure type ARE-310, manufactured by Thinky Co., Ltd.), stirring for 30 seconds at 2000 rpm using the planetary centrifugal mixer, adding 27.00 g of the aluminum nitride particles I, and then stirring the mixture three times for 30 seconds at 2000 rpm.

Table 3 shows the evaluation results of the physical properties of the resin composition X-12.

### [Example 13]

Particles X-2 containing one layer of silicon-containing oxide film (b) were obtained in the same manner as Example 2.

Next, a resin composition X-13 was obtained in the same manner as Example 12, except that the particles X-2 were used instead of the aluminum nitride particles I. In addition, the compound a was used in amount such that the content of film (a) in the aluminum nitride filler was 0.22 parts by mass with respect to 100 parts by mass of particles X-2 (amount equivalent to 8.0×10⁻⁴ g per 1 m² of surface area of particles X-2).

Table 3 shows the evaluation results of the physical properties of the resin composition X-13.

### [Comparative Example 1]

27.00 g of the aluminum nitride particles I and 9.99 g of the epoxy resin YD-128 were weighed into a container (volume 150 mL) for a planetary centrifugal mixer (trade name: Awatori Rentaro atmospheric pressure type ARE-310, manufactured by Thinky Co., Ltd.), stirred for 30 seconds at 2000 rpm using the planetary centrifugal mixer, and then manually stirred for 20 seconds using a medicine spoon. The above stirring was performed three times to obtain a resin composition Y-1.

Table 4 shows the evaluation results of the physical properties of the resin composition Y-1.

### [Comparative Example 2]

Particles X-2 containing one layer of silicon-containing oxide film (b) were obtained in the same manner as Example 2.

Next, a resin composition Y-2 was obtained in the same manner as Comparative Example 1, except that the particles X-2 were used instead of the aluminum nitride particles I.

Table 4 shows the evaluation results of the physical properties of the resin composition Y-2.

### [Comparative Example 3]

Particles X-3 containing two layers of silicon-containing oxide film (b) were obtained in the same manner as Example 3.

Next, a resin composition Y-3 was obtained in the same manner as Comparative Example 1, except that the particles X-3 were used instead of the aluminum nitride particles I.

Table 4 shows the evaluation results of the physical properties of the resin composition Y-3.

### [Comparative Example 4]

Particles X-8 containing one layer of silicon-containing oxide film (b) were obtained in the same manner as Example 8.

Next, 20.00 g of particles X-8, 12.50 g of AA-3, 10.00 g of AKP-30, and 2.50 g of the epoxy resin YD-128 were weighed into a container (volume 150 mL) for a planetary centrifugal mixer (trade name: Awatori Rentaro atmospheric pressure type ARE-310, manufactured by Thinky Co., Ltd.), stirred for 30 seconds at 2000 rpm using the planetary centrifugal mixer, and then manually stirred for 20 seconds using a medicine spoon. The above stirring was performed three times to obtain a resin composition Y-4.

Table 4 shows the evaluation results of the physical properties of the resin composition Y-4.

### [Comparative Example 5]

Particles Y-1 were obtained by forming one layer of silicon-containing oxide film (b) in the same manner as Example 2, except that aluminum nitride particles III were used instead of aluminum nitride particles I.

Next, 17.62 g of particles Y-1, 11.10 g of AA-3, 9.08 g of AKP-30, and 2.16 g of the epoxy resin YD-128 were weighed into a container (volume 150 mL) for a planetary centrifugal mixer (trade name: Awatori Rentaro atmospheric pressure type ARE-310, manufactured by Thinky Co., Ltd.), stirred for 30 seconds at 2000 rpm using the planetary centrifugal mixer, and then manually stirred for 20 seconds using a medicine spoon. The above stirring was performed three times to obtain a resin composition Y-5.

Table 4 shows the evaluation results of the physical properties of the resin composition Y-5.

### [Comparative Examples 6 to 11]

Particles X-2 containing one layer of silicon-containing oxide film (b) were obtained in the same manner as Example 2.

Next, aluminum nitride fillers Y-6 to Y-11 were obtained in the same manner as Example 2, except that 0.85 g (amount such that the content of film (a') (film composed of surface treatment agent) in the aluminum nitride filler was 1.70 parts by mass with respect to 100 parts by mass of particles X-2 = amount equivalent to 6.3×10⁻³ g per 1 m² of surface area of particles X-2) of compounds c to h (surface treatment agent) rather than compound (A) listed in Table 4 was used instead of compound a.

Next, resin compositions Y-6 to Y-11 were obtained in the same manner as Comparative Example 1, except that the aluminum nitride fillers Y-6 to Y-11 were used instead of the aluminum nitride particles I.

Table 4 shows the evaluation results of the physical properties of the resin compositions Y-6 to Y-11.

### [Comparative Example 12]

An aluminum nitride filler Y-12 was obtained, and then a resin composition Y-12 was obtained, in the same manner as Example 13, except that 0.06 g (amount such that the content of film (a') (film composed of surface treatment agent) in the aluminum nitride filler was 0.22 parts by mass with respect to 100 parts by mass of particles X-2 = amount equivalent to 8.0×10⁻⁴ g per 1 m² of surface area of particles X-2) of compound g (surface treatment agent) was used instead of compound a.

Table 4 shows the evaluation results of the physical properties of the resin composition Y-12.

### [Table 3]

**Table 3**

| | | | | Example | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Composition/ Production conditions | Aluminum nitride filler Resin composition | Aluminum nitride particle type | | I | I | I | I | I | I | I | II | II | III | III | I | I |
| | | Number of layers of silicon-containing oxide film (b) | | 0 | 1 | 2 | 0 | 1 | 2 | 1 | 1 | 1 | 0 | 0 | 0 | 1 |
| | | Organosilicone compound film (c)*¹ | | B | B | B | A | A | A | B | B | A | B | A | B | B |
| | | Compound (A) introduction method*² | | A | A | A | A | A | A | A | A | A | A | A | B | B |
| | | Compound (A) type | | a | a | a | a | a | a | a | b | b | a | a | a | a |
| | | Compound (A) amount [parts by mass]*³ | | 1.70 | 1.70 | 1.70 | 1.70 | 1.70 | 1.70 | 0.50 | 0.30 | 0.30 | 0.20 | 0.20 | 0.22 | 0.22 |
| | | Compound (A) amount [g/m²] | | 6.3×10⁻³ | 6.3x10⁻³ | 6.3×10⁻³ | 6.3×10⁻³ | 6.3×10⁻³ | 6.3× 10⁻³ | 1.9×10⁻³ | 1.2× 10⁻² | 1.2×10⁻² | 2.9×10⁻² | 2.9× 10⁻² | 8.0×10-⁴ | 8.0×10-⁴ |
| | | Content of aluminum nitride filler [% by volume] | | 49 | 49 | 49 | 49 | 49 | 49 | 49 | 85 | 85 | 85 | 85 | 49 | 49 |
| | | Added amount*⁴ [g] | Aluminum nitride filler | 27.00 | 27.00 | 27.00 | 27.00 | 27.00 | 27.00 | 27.00 | 20.00 | 20.00 | 17.62 | 17.62 | - | - |
| | | | Aluminum nitride particles | - | - | - | - | - | - | - | - | - | - | - | 27.00 | - |
| | | | Particle*⁵ | - | - | - | - | - | - | - | - | - | - | - | - | 27.00 |
| | | | Compound (A) | - | - | - | - | - | - | - | - | - | - | - | 0.06 | 0.06 |
| | | | AA-3 | - | - | - | - | - | - | - | 12.50 | 12.50 | 11.10 | 11.10 | - | - |
| | | | AKP-30 | - | - | - | - | - | - | - | 10.00 | 10.00 | 9.08 | 9.08 | - | - |
| | | | Epoxy resin YD-128 | 9.99 | 9.99 | 9.99 | 9.99 | 9.99 | 9.99 | 9.99 | 2.50 | 2.50 | 2.16 | 2.16 | 9.99 | 9.99 |
| Evaluation | Flow viscosity [Pa·s] | | | 1200 | 1600 | 1400 | 700 | 1700 | 1500 | 1600 | 3900 | 3500 | 510 | 450 | 2410 | 3500 |
| | Thermal conductance [W/mK] | | | 2.0 | 2.1 | 2.1 | 2.1 | 2.0 | 2.0 | 2.1 | 4.0 | 4.1 | 7.2 | 7.5 | - | - |

| | | | | | | | | | | | | | | | | |
|---|---|---|---|---|---|---|---|---|---|---|---|---|---|---|---|---|
| *1 A: Silicon-containing oxide film (c) present B: Silicon-containing oxide film (c) not present *2 A: Film (a) formed on aluminum nitride particles before mixing with epoxy resin YD-128 B: Epoxy resin YD-128 mixed with compound (A), and then aluminum nitride particles added to form film (a) on aluminum nitride particles *3 Amount with respect to total 100 parts by mass of an aluminum nitride particle, or particle containing silicon-containing oxide film (b) and an aluminum nitride particle, or particle containing an organosilicone compound film (c) and an aluminum nitride particle, or particle containing silicon-containing oxide film (b), organosilicone compound film (c), and aluminum nitride particle *4 Amount added when resin composition is produced *5 Particle containing silicon-containing oxide film (b) and an aluminum nitride particle | | | | | | | | | | | | | | | | |

### [Table 4]

**Table 4**

| | | | | Comparative Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Composition / Production conditions | Aluminum nitride particles | Aluminum nitride particle type | | 1 | - | - | - | - | - | - | - | - | - | - | - |
| | Particle*¹ | Aluminum nitride particle type | | - | I | I | II | III | - | - | - | - | - | - | - |
| | | Number of layers of silicon-containing oxide film (b) | | - | 1 | 2 | 1 | 1 | - | - | - | - | - | - | - |
| | Aluminum nitride filler | Aluminum nitride particle type | | - | - | - | - | - | I | I | I | I | I | I | I |
| | | Number of layers of silicon-containing oxide film (b) | | - | - | - | - | - | I | I | I | I | I | I | I |
| | | Surface treatment agent introduction method*² | | - | - | - | - | - | A | A | A | A | A | A | B |
| | | Surface treatment agent type | | - | - | - | - | - | c | d | e | f | g | h | g |
| | | Surface treatment agent amount [parts by mass]*³ | | - | - | - | - | - | 1.70 | 1.70 | 1.70 | 1.70 | 1.70 | 1.70 | 0.22 |
| | | Surface treatment agent amount [g/m²] | | - | - | - | - | - | 6.3×1 0⁻³ | 6.3×1 0⁻³ | 6.3×10⁻³ | 6.3×10⁻³ | 6.3×10⁻³ | 6.3×10⁻³ | 8.0×10⁻⁴ |
| | Resin composition | Content of aluminum nitride filler or aluminum nitride particles or particle [% by volume] | | 49 | 49 | 49 | 85 | 85 | 49 | 49 | 49 | 49 | 49 | 49 | 49 |
| | | Added amount^{*4} [g] | Aluminum nitride filler | - | - | - | - | - | 27.00 | 27.00 | 27.00 | 27.00 | 27.00 | 27.00 | - |
| | | | Aluminum nitride particles | 27.00 | - | - | - | - | - | - | - | - | - | - | - |
| | | | Particle^{*1} | | 27.00 | 27.00 | 20.00 | 17.62 | - | - | - | - | - | - | 27.00 |
| | | | Surface treatment agent | - | - | - | - | - | - | - | - | - | - | - | 0.06 |
| | | | AA-3 | - | - | - | 12.50 | 11.10 | - | - | - | - | - | - | - |
| | | | AKP-30 | - | - | - | 10.00 | 9.08 | - | - | - | - | - | - | - |
| | | | Epoxy resin YD-128 | 9.99 | 9.99 | 9.99 | 2.50 | 2.16 | 9.99 | 9.99 | 9.99 | 9.99 | 9.99 | 9.99 | 9.99 |
| Evaluation | Flow viscosity [Pa·s] | | | 2200 | 10800 | Over 100000 | 19000 | 950 | 9600 | 1400 | 5400 | 7500 | 3700 | 3200 | 6680 |
| | Thermal conductance [W/mK] | | | 2.1 | 2.1 | 2.0 | 3.9 | 7.1 | 2.0 | 2.0 | 2.1 | 2.0 | 2.1 | 2.0 | - |

| | | | | | | | | | | | | | | | |
|---|---|---|---|---|---|---|---|---|---|---|---|---|---|---|---|
| *] Particle containing silicon-containing oxide film (b) and an aluminum nitride particle *2 A: Film (a') formed on aluminum nitride particles before mixing with epoxy resin YD-128 B: Epoxy resin YD-128 mixed with surface treatment agent, and then aluminum nitride particles added to form film (a') on aluminum nitride particles *3 Amount of particle containing an aluminum nitride particle, or particle containing silicon-containing oxide film (b) and an aluminum nitride particle, or particle containing an organosilicone compound film (c) and an aluminum particle, or particle containing silicon-containing oxide film (b), organosilicone compound film (c), and aluminum nitride particle with respect to total 100 parts by mass thereof *4 Amount added when resin composition is produced | | | | | | | | | | | | | | | |

From Example 1 and Comparative Example 1, Example 2 and Comparative Example 2, Example 3 and Comparative Example 3, Example 8 and Comparative Example 4, and Example 10 and Comparative Example 5, it can be seen that when the aluminum nitride filler contained the film (a), which includes the compound (A), the increase in viscosity when mixed with the epoxy resin was suppressed.

In addition, it can be seen that in Comparative Examples 6 to 12 using compounds c to h, which are not compounds that have a polyethyleneimine backbone and a polyalkylene oxide chain, and have a weight average molecular weight of 2000 or more and 10000 or less, the viscosity increased when mixed with the epoxy resin.

Further, from Examples 1 to 11 and Comparative Examples 1 to 11, it can be seen that the film (a) containing the compound (A) does not impair the high thermal conductivity inherent to aluminum nitride.

### [Adhesive strength]

1.25 g of an epoxy resin (trade name: EPPN-502H, manufactured by Nippon Kayaku Co., Ltd.), 1.25 g of a liquid high-purity epoxy resin (trade name: ZX-1059, manufactured by Nippon Steel Chemical & Material Co., Ltd.), 0.02 g of triphenylphosphine (reaction accelerator), 1.90 g of cyclohexanone, and 0.06 g of compound a were placed in a container (volume 150 mL) for a planetary centrifugal mixer (manufactured by Thinky Co., Ltd., trade name: Awatori Rentaro atmospheric pressure type ARE-310), and mixed and stirred once for 30 seconds at 2000 rpm using the planetary centrifugal mixer to obtain a resin composition. To this resin composition, 20.00 g of a high thermal conductivity AIN filler (trade name: FAN-f50-A1, manufactured by Furukawa Electric Co., Ltd., D50 = 50 µm), 4.06 g of a high-purity alumina (trade name: Advanced Alumina AA-3, manufactured by Sumitomo Chemical Co., Ltd., D50 = 0.40 mm), and 8.11 g of a high-purity alumina (trade name: Advanced Alumina AA-4, manufactured by Sumitomo Chemical Co., Ltd., D50 = 0.47 mm) were added, and using the above-described planetary centrifugal mixer, mixing and stirring were performed for 30 seconds at a rotation speed of 2000 rpm three times in total to obtain a slurry.

The obtained slurry was applied onto 12 mm-thick copper foil using an applicator with a coating gap of 350 mm, dried at 100°C for 10 minutes, 12 mm-thick copper foil was then placed on top, and both sides of the stack were sandwiched between 38 mm polyester sheets to obtain a pre-pressed sheet. This pre-pressed sheet was pressed and cured at 180°C under a pressure of 5 MPa for 1 hour to form a copper-clad board.

Next, the polyester sheets were removed, and 10 mm-wide adhesive masking tape made of PET was firmly pasted onto the copper foil with a gap of 2 to 3 mm. The resultant piece was immersed in a 9% aqueous sodium peroxide solution at 75°C for 60 minutes to elute the copper, and then taken out and thoroughly washed with distilled water. After wiping off moisture with a laboratory wiper, the piece was air-dried to create a strip having a width of 10 mm. The PET adhesive masking tape was peeled off to obtain a peel test piece.

One end of the copper foil of the peel test piece was peeled off, a 90 degree peeling jig was set in a desktop precision universal testing machine "Autograph AGS-X" (manufactured by Shimadzu Corporation), and adhesive strength was measured at a peeling rate of 50 mm/min. The results are shown in Table 5.

Table 5 also shows the measurement results of the adhesive strength when compounds b to g were used instead of compound a, and the measurement results of the adhesive strength when compound a was not used. It is noted than when compounds d to f were used, the dried slurry did not adhere to the copper foil, and the adhesive strength could not be measured.

### [Table 5]

**Table 5**

| Compound (A) or surface treatment agent | Adhesive strength [kN/m] |
|---|---|
| a | 0.40 |
| b | 0.39 |
| c | 0.01 |
| d | did not adhere |
| e | did not adhere |
| f | did not adhere |
| g | 0.30 |
| none | 0.40 |

From the results in Table 5, it can be seen that the resin composition containing any one of compounds a and b, which is compound (A), and an epoxy resin had good adhesive strength.

Therefore, it is inferred that a resin composition containing an epoxy resin and an aluminum nitride filler containing a film (a), which contains compound (A), will also have good adhesive strength.

## Claims

1. An aluminum nitride filler comprising:
aluminum nitride particles; and
a film (a) comprising a compound (A) having a polyethyleneimine backbone and a polyalkylene oxide chain, and having a weight average molecular weight of 2000 or more and 10000 or less.

2. The aluminum nitride filler according to claim 1, comprising a silicon-containing oxide film (b).

3. The aluminum nitride filler according to claim 1 or 2, comprising an organosilicone compound film (c) having a silanol group.

4. The aluminum nitride filler according to claim 3, wherein the film (a) and the organosilicone compound film (c) are adjacent.

5. The aluminum nitride filler according to claim 1, comprising 5.0×10⁻⁴ g or more and less than 5.0×10⁻² g of the compound (A) per 1 m² of surface area calculated from a specific surface area (m²/g) of the aluminum nitride particles determined by a BET method.

6. The aluminum nitride filler according to claim 2, comprising 5.0×10⁻⁴ g or more and less than 5.0×10⁻² g of the compound (A) per 1 m² of surface area calculated from a specific surface area (m²/g) of a particle comprising the silicon-containing oxide film (b) and the aluminum nitride particle determined from a BET method.

7. The aluminum nitride filler according to claim 3, comprising 5.0×10⁻⁴ g or more and less than 5.0×10⁻² g of the compound (A) per 1 m² of surface area calculated from a specific surface area (m²/g) of a particle comprising the organosilicone compound film (c) having a silanol group and the aluminum nitride particle determined by a BET method.

8. The aluminum nitride filler according to claim 3, comprising 5.0×10⁻⁴ g or more and less than 5.0×10⁻² g of the compound (A) per 1 m² of surface area calculated from a specific surface area (m²/g) of a particle comprising the silicon-containing oxide film (b), the organosilicone compound film (c) having a silanol group, and the aluminum nitride particle determined by a BET method.

9. A method for producing an aluminum nitride filler comprising aluminum nitride particles and a film (a) comprising a compound (A) having a polyethyleneimine backbone and a polyalkylene oxide chain, and having a weight average molecular weight of 2000 or more and 10000 or less,
the method comprising a fourth step of forming the film (a).

10. The method for producing an aluminum nitride filler according to claim 9, comprising:
a first step of performing coating with an organosilicone compound having an active hydrogen; and
a second step of forming a silicon-containing oxide film (b) by heating.

11. The method for producing an aluminum nitride filler according to claim 9 or 10, comprising a third step of forming an organosilicone compound film (c) having a silanol group by performing coating with an organosilicone compound having an active hydrogen by vapor deposition and treating the organosilicone compound used in the coating with a basic substance.

12. A resin composition comprising the aluminum nitride filler according to claim 1 or 2 and an epoxy resin.

13. A method for producing the resin composition according to claim 12, comprising a step I of admixing the aluminum nitride filler to the epoxy resin.

14. A method for producing the resin composition according to claim 12, comprising:
a step II-1 of obtaining a composition i comprising the compound (A) and the epoxy resin; and
a step II-2 of admixing, to the composition i, at least one particle selected from an aluminum nitride particle, a particle comprising a silicon-containing oxide film (b) and an aluminum nitride particle, a particle comprising an organosilicone compound film (c) and an aluminum nitride particle, and a particle comprising a silicon-containing oxide film (b), an organosilicone compound film (c), and an aluminum nitride particle.
